# EUROPEAN PATENT APPLICATION

(11) **EP 4 620 653 A1**
(43) Date of publication of application: **24.09.2025**
(21) Application number: 24883583.7
(22) Date of filing: 29.05.2024
(51) Int. Cl.: B29C 63/00

(54) **BATTERY FILM APPLICATION DEVICE AND FILM APPLICATION METHOD THEREOF**

(30) Priority: 23.01.2024 CN 202410089401
(71) Applicant: Contemporary Amperex Runzhi Software Technology Limited, Ningde, Fujian 352100 (CN)
(72) Inventor: XU, Yanjun, Ningde Fujian 352100 (CN); CHEN, Wentao, Ningde Fujian 352100 (CN); YANG, Jun, Ningde Fujian 352100 (CN)
(74) Representative: Ran, Handong
(86) International application number: PCT/CN2024/096115
(87) International publication number: WO 2025/156534

(57) **Abstract**

The present application discloses a battery film attachment device and a film attachment method therefor. The battery film attachment device has a film supply station and a film attachment station. The battery film attachment device includes a battery positioning apparatus, a film supply apparatus, a film attachment apparatus and a control apparatus. The battery positioning apparatus is provided at the film attachment station to position the battery module in the tray to the film attachment station. The film supply apparatus is provided corresponding to the film supply station to provide a formed insulating film to the film supply station. The film attachment apparatus has a movement travel between the film supply station and the film attachment station to pick up the formed insulating film at the film supply station and attach the formed insulating film onto the battery module at the film attachment station. The control apparatus is electrically connected to the battery positioning apparatus, the film supply apparatus and the film attachment apparatus to control the battery positioning apparatus, the film supply apparatus and the film attachment apparatus to act, thereby improving the automation degree of the film attachment device, overcoming the shortcomings of manual operation, and greatly improving work efficiency and product quality.

## Description

The present application claims priority to Chinese patent application No. 202410089401.2 filed with the China National Intellectual Property Administration on January 23, 2024 and entitled "BATTERY FILM ATTACHMENT DEVICE AND FILM ATTACHMENT METHOD THEREFOR", which is incorporated herein by reference in its entirety.

### TECHNICAL FIELD

The present application relates to the technical field of battery module film attachment, and in particular, to a battery film attachment device and a film attachment method therefor.

### BACKGROUND

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, the demand in the market is also constantly expanding. However, the existing battery film attachment process is entirely completed by manual operation, which is not only time-consuming and labor-intensive, but also has low precision, making it difficult to improve production efficiency and product quality.

### TECHNICAL SOLUTION

The main purpose of the present application is to propose a battery film attachment device and a film attachment method therefor, aiming to solve the problems of inadequacies of manual operation and low production efficiency.

In a first aspect, the present application provides a battery film attachment device, the battery film attachment device has a film supply station, a lifting station, and a film attachment station provided corresponding to the lifting station in a third direction, and the battery film attachment device includes:
a conveying line, passing through the lifting station and used for conveying a battery module to the lifting station;
a battery positioning apparatus, including a positioning base and a positioning lifting structure provided on the positioning base, wherein the positioning lifting structure moves between the lifting station and the film attachment station and used for lifting the battery module at the lifting station to the film attachment station;
a film supply apparatus, provided corresponding to the film supply station and used for providing a formed insulating film to the film supply station; and
a film attachment apparatus, having a movement travel between the film supply station and the film attachment station, used for picking up the formed insulating film at the film supply station and attaching the formed insulating film onto the battery module at the film attachment station; and
a control apparatus, electrically connected to the battery positioning apparatus, the film supply apparatus and the film attachment apparatus, and used for controlling the battery positioning apparatus, the film supply apparatus and the film attachment apparatus to act.

In the embodiment, the conveying line is provided to convey the battery module to the positioning base, and the positioning lifting structure is provided to drive the battery module to move to the film attachment station along the third direction, the film supply apparatus is provided to provide a formed insulating film to the film supply station, the film attachment apparatus is provided to attach the formed insulating film at the film supply station onto the battery module at the film attachment station, and the control apparatus is provided to control the battery positioning apparatus, the film supply apparatus and the film attachment apparatus to act. In this way, the control apparatus is provided to control the battery positioning apparatus to position the battery module to the film attachment station, and control the film supply apparatus to provide a formed insulating film to the film supply station, and then control the film attachment apparatus to attach the formed insulating film at the film supply station onto the battery module, thereby improving the degree of automation of the film attachment device, overcoming the shortcomings of manual operation, and greatly improving work efficiency and product quality.

In some embodiments, the positioning lifting structure includes:
a positioning lifting seat, movably mounted on the positioning base along the third direction, and configured to movably pass through a pocket hole in the middle of the tray; and
a positioning lifting driving structure, provided on the positioning base and drivably connected to the positioning lifting seat, used for driving the positioning lifting seat to move along the third direction.

In the embodiment, since the battery module is loaded in the tray and transferred to the battery positioning apparatus by the conveying apparatus, the lower part of the battery module is usually blocked by the tray, leading to the fact that the lower part of the battery module cannot be attached with a film. Therefore, in the present application, the positioning lifting seat is provided to carry the load of the battery module, and the positioning lifting driving structure is provided to drive the positioning lifting seat to move along the third direction to separate the battery module from the tray so as to transfer the battery module to the film attachment station.

In some embodiments, the battery positioning apparatus includes a positioning clamping structure, the positioning clamping structure includes two positioning clamping portions mounted on the positioning base at intervals along a first direction, and at least one of the positioning clamping portions can move along the first direction so that the two positioning clamping portions can clamp and position the battery module to the film attachment station.

In the embodiment, the positioning base is provided to mount the positioning clamping structure, and two positioning clamping portions are provided to clamp and position the battery module on the positioning base. In this way, by providing the positioning clamping structure, after the battery module is transferred to the battery positioning apparatus, the battery module is clamped and positioned on the positioning base, thereby reducing the risk of movement of the battery module during subsequent film attachment, thereby facilitating subsequent film attachment of the battery module.

In some embodiments, the battery positioning apparatus includes a positioning lifting structure used for driving the battery module to move to the film attachment station along the third direction;
the positioning base includes a positioning seat body and two positioning mounting seats movably mounted on the positioning seat body along the third direction, and the two positioning clamping portions are respectively mounted on the two positioning mounting seats.

In the embodiment, two mounting seats are provided so that the two positioning clamping portions can move along the third direction, so as to transfer the battery module to the film attachment station, thereby facilitating subsequent film attachment of the battery module.

In some embodiments, the positioning clamping structure further includes a first positioning clamping driving apparatus provided on the positioning base, and the first positioning clamping driving apparatus is drivably connected to the positioning clamping portion to drive the positioning clamping portion to move along the first direction.

In the embodiment, the first positioning clamping driving apparatus is provided to drive the positioning clamping portion to move, so that the positioning clamping structure can clamp and position the battery module on the positioning base.

In some embodiments, the positioning clamping structure further includes a second positioning clamping driving apparatus provided on the positioning seat body, and the second positioning clamping driving apparatus is drivably connected to the positioning mounting seat to drive the positioning mounting seat to move along the third direction;
wherein the first positioning clamping driving apparatus is provided on the positioning mounting seat.

In the embodiment, the second positioning clamping driving apparatus is provided to drive the positioning mounting seat to move so as to transfer the battery module to the film attachment station, thereby facilitating subsequent film attachment of the battery module.

In some embodiments, the battery positioning apparatus further includes a positioning leveling structure, the positioning leveling structure includes two positioning leveling portions provided at intervals along a second direction, each of the positioning leveling portions can move along the second direction to enable the two positioning leveling portions to clamp and level the battery module;
wherein the first direction intersects with the second direction.

In the embodiment, two positioning leveling portions are provided to enable the positioning leveling structure to level the two sides of the battery module in the width direction so that the sides of the battery module are flush, and the two positioning leveling portions can respectively exit the leveling position, thereby facilitating subsequent film attachment on the two sides of the battery module in the width direction.

In some embodiments, the battery positioning apparatus includes a positioning lifting structure used for driving the battery module to move to the film attachment station along the third direction;
the positioning base includes a positioning seat body and two positioning leveling seats movably mounted on the positioning seat body along the third direction, and the two positioning leveling portions are respectively mounted on the two positioning leveling seats.

In the embodiment, the battery module is not leveled until it moves upward to the film attachment station. To this end, in the embodiment, two positioning leveling seats are provided to enable the two positioning leveling portions to move upward, so that the positioning leveling structure can be matched with the structure of the positioning clamping member, so as to level the battery module and make the two sides of the battery module along the width direction flush, thereby facilitating subsequent film attachment of the battery module.

In some embodiments, the positioning leveling structure further includes two first positioning leveling driving apparatuses provided on the positioning base, and the two first positioning clamping driving apparatuses are drivably connected to the two positioning leveling portions to drive the positioning leveling portions to move along the second direction.

In the embodiment, if the two positioning leveling portions are driven by one driving apparatus, an additional transmission structure needs to be provided, and the structure is relatively complicated. Therefore, two first positioning leveling driving apparatuses are provided to drive the two positioning leveling portions separately to avoid the two positioning leveling portions affecting each other.

In some embodiments, the positioning leveling structure further includes a second positioning leveling driving apparatus provided on the positioning seat body, the second positioning leveling driving apparatus is drivably connected to the positioning leveling seat to drive the positioning leveling seat to move along the third direction, wherein the first positioning leveling driving apparatus is provided on the positioning mounting seat.

In the embodiment, the second positioning leveling driving apparatus is provided to drive the positioning leveling seat to move so as to be matched with the positioning clamping structure to level the battery module at the film attachment station, so that the two sides of the battery module along the width direction are flush, thereby facilitating subsequent film attachment of the battery module.

In some embodiments, the battery positioning apparatus further includes a tray positioning structure provided on the positioning base and used for positioning the tray onto the positioning base.

In the embodiment, the tray positioning structure is provided to position the tray loaded with the battery module to a preset positioning position so as to facilitate subsequent film attachment of the battery module.

In some embodiments, the tray positioning includes:
a tray positioning seat, movably mounted on the positioning base along the third direction;
a tray positioning pin, provided on the tray positioning seat and used for passing through a corresponding positioning hole on the tray; and
a tray positioning driving structure, provided on the positioning base and drivably connected to the tray positioning seat to drive the tray positioning seat to move along the third direction.

In the embodiment, the tray positioning seat is provided to mount the tray positioning pin, and the tray positioning pin is provided to position the tray at a preset positioning position. At the same time, the tray positioning driving structure is provided to drive the tray positioning seat to move. This can drive the tray positioning pin upward to pass through the corresponding positioning hole on the tray to position the tray onto the positioning base, and can also drive the tray positioning pin downward to enable the tray loaded with the battery module to be transferred to the battery positioning apparatus.

In some embodiments, a plurality of tray positioning pins are provided, and the plurality of tray positioning pins are provided at intervals on the tray positioning seat.

In the embodiment, if there is only one tray positioning pin, the tray may rotate and cannot be completely positioned. Therefore, a plurality of tray positioning pins are provided to reduce the possibility of the tray rotating, so that the tray can be completely positioned on the positioning base.

In some embodiments, the battery positioning apparatus further includes a battery cell unlocking structure provided on the positioning base, and the battery cell unlocking structure includes a battery cell unlocking member capable of moving along the first direction to drive a clamping plate on the tray to move toward the outside of the tray along the first direction.

In the embodiment, the battery cell unlocking member is provided to be movable so that the battery unlocking member can compress the locking spring on the tray to enable the clamping plate to move toward the outside of the tray along the first direction, so as to release the tray from clamping and fixing the battery module, which helps to separate the battery module from the tray subsequently.

In some embodiments, the battery cell unlocking structure further includes:
an unlocking mounting seat, slidably mounted on the positioning base along the first direction;
an unlocking sliding seat, slidably mounted on the unlocking mounting seat along the second direction, the battery cell unlocking member being provided on the unlocking sliding seat; and
an unlocking driving structure, including a first unlocking driving apparatus provided between the positioning base and the unlocking mounting seat, and a second unlocking driving apparatus provided between the unlocking mounting seat and the unlocking sliding seat, wherein the first unlocking driving apparatus is drivably connected to the unlocking mounting seat to drive the unlocking mounting seat to move along the first direction, and the second unlocking driving apparatus is drivably connected to the unlocking sliding seat to drive the unlocking sliding seat to move along the second direction;
wherein the first direction intersects with the second direction.

In the embodiment, when it is necessary to unlock the battery module from the tray, the second unlocking driving apparatus drives the unlocking sliding seat to move along the second direction, so as to drive the battery cell unlocking member to move along the second direction, so that the battery cell unlocking member can be inserted into the tray along the second direction. Then the first unlocking driving apparatus drives the unlocking mounting seat to move along the first direction, so as to drive the battery cell unlocking member to move along the first direction, so that the battery cell unlocking member can compress the locking spring on the tray to enable the clamping plate on the tray to move toward the outside of the tray along the first direction, thereby releasing the tray from clamping and locking the battery module. In this way, the unlocking sliding seat is provided to enable the battery cell unlocking member to move along the second direction, and the unlocking mounting seat is provided to enable the battery cell unlocking member to move along the first direction. At the same time, the unlocking driving structure is provided to drive the unlocking mounting seat and the unlocking sliding seat to move, so that the battery cell unlocking member can release the tray from clamping and locking the battery module.

In some embodiments, a plurality of battery cell unlocking structures are provided, and the plurality of battery cell unlocking structures are provided at intervals along the first direction and/or the second direction to respectively correspond to a plurality of locking springs of the tray.

In the embodiment, a plurality of battery cell unlocking structures are provided to compress the corresponding locking springs on the tray so that the clamping plate on the tray can translate, thereby facilitating the clamping plate on the tray to slide along a first level.

In some embodiments, the film supply apparatus includes:
a feed base;
a feed structure, including a film supply tray provided on the feed base, wherein the film supply tray is used to mount an insulating film roll;
a separation structure, provided on the feed base and used for separating the insulating film roll into an insulating film and a release paper;
a film pulling structure, including a film pulling seat mounted on the feed base, and two film pulling clamping portions mounted on the film pulling seat, wherein the distance between the two film pulling clamping portions is adjustable to clamp or release the insulating film, and the film pulling seat is movably provided along the first direction to pull the insulating film to the film supply station; and
a cutting structure, including a cutting knife provided on the feed base, and used for cutting the insulating film so as to form the formed insulating film at the film supply station.

In the present embodiment, the feed base is provided to mount the feed structure, the separation structure, the film pulling structure and the cutting structure; the feed tray is provided to provide an insulating film roll; the separation structure is provided to separate the insulating film roll into an insulating film and a release paper; the film pulling structure is provided to pull out an insulating film of a target length as required; the cutting structure is provided to form a formed insulating film of target length, so that the length of the formed insulating film can be matched with the film attachment length of the battery module, thereby helping to improve the versatility of the film supply apparatus.

In some embodiments, the film supply apparatus further includes a film pulling clamping structure provided on the feed base, and the film pulling clamping structure is provided between the film supply tray and the film pulling structure to fix the insulating film onto the feed base.

In the embodiment, the film pulling clamping structure is provided to clamp the insulating film between the separation structure and the film pulling structure, which not only helps the cutting structure to cut the insulating film pulled out, but also reduces the probability of the insulating film shrinking into a clump, thereby helping the film pulling structure to continue pulling films subsequently.

In some embodiments, the film pulling clamping structure includes:
two film pulling clamping portions, provided on the feed base, wherein at least one of the film pulling clamping portions is a movable film pulling clamping portion, and the movable film pulling clamping portion is movably provided along the third direction and used for clamping the insulating film onto the feed base; and
a film pulling clamping driving structure, provided on the feed base and drivably connected to the movable film pulling clamping portion to drive the movable film pulling clamping portion to move along the third direction.

In the embodiment, the film pulling clamping driving structure is provided to drive the movable film pulling clamping portion to move so as to clamp or release the insulating film, which does not affect the film pulling of the film pulling structure while helping the cutting structure to cut the insulating film.

In some embodiments, the separation structure includes:
a positioning roller, provided on the feed base and provided corresponding to the film pulling structure; and
a winding roller, rotatably mounted on the feed base and used for separating and winding the release paper.

In the embodiment, the positioning roller is provided to make the separated insulating film flush with the height of the film pulling structure, thereby helping the film pulling structure to pull the film. At the same time, the winding roller is provided so that the release paper can be separated and the separated release paper can be wound up.

In some embodiments, the feed structure, the film pulling structure and the cutting structure are correspondingly configured as a film supply assembly, two film supply assemblies are provided, and the two film supply assemblies are mounted at intervals on the feed base.

In the embodiment, the two film supply assemblies are provided so that when the film attachment apparatus adsorbs the formed insulating film of one of the film supply assemblies, the other film supply assembly can provide a formed insulating film, thereby reducing the possibility of waiting of the film attachment apparatus and helping to improve the film supply efficiency of the film supply apparatus.

In some embodiments, the film supply apparatus further includes a film supply carrying seat movably mounted on the feed base along the third direction for carrying the insulating film pulled out.

In the embodiment, when the film pulling structure needs to pull a film, the film supply carrying seat moves downward to prevent the film supply carrying from interfering with the film pulling structure, so that the film pulling structure can pull out the insulating film. When the film pulling structure does not need to pull a film, the film supply carrying seat moves upward to carry the formed insulating film resulting from cutting, making it convenient for the film attachment apparatus to adsorb the formed insulating film.

In some embodiments, the film attachment apparatus includes:
a mechanical arm, having a movement travel between the film supply station and the film attachment station;
a film attachment mounting seat, mounted on the mechanical arm;
an adsorption apparatus, provided on the film attachment mounting seat, and used for adsorbing the formed insulating film on the film supply station when the mechanical arm is at the film supply station, and attaching the formed insulating film onto the battery module at the film supply station when the mechanical arm is at the film attachment station.

In the embodiment, the film attachment mounting seat is provided so as to arrange the adsorption apparatus, and at the same time, the adsorption apparatus is provided so as to adsorb the formed insulating film. Meanwhile, the mechanical arm is provided to switch between the film supply station and the film attachment station so as to attach the formed insulating film at the film supply station onto the battery module.

In some embodiments, the film attachment mounting base includes:
a film attachment seat body, mounted on the mechanical arm;
a movable film attachment seat, mounted on the film attachment seat body in a direction approaching or moving away from the film attachment seat body; and
a film attachment buffer structure, provided between the film attachment seat body and the movable film attachment seat, and used for elastically supporting the movable film attachment seat.

In the embodiment, the film attachment seat body is provided to mount the movable film attachment seat, and the film attachment buffer structure is provided to elastically support the movable film attachment seat, so that the movable film attachment seat and the battery module can form an elastic abutment, which helps to buffer the impact of the film attachment apparatus.

In some embodiments, the film attachment seat body is provided with a film attachment mounting hole;
the film attachment buffer structure includes:
a film attachment mounting rod, one end of which is provided on the movable film attachment seat, and the other end of which passes through the film attachment mounting hole along a direction approaching or moving away from the film attachment seat body;
a film attachment elastic member, sleeved on the peripheral side of the film attachment mounting rod and provided between the film attachment seat body and the movable film attachment seat; and
an elastic adjustment sleeve, threadedly sleeved on the other end of the film attachment mounting rod and used for adjusting the distance between the film attachment seat body and the movable film attachment seat.

In the embodiment, the film attachment mounting rod is provided so that the film attachment elastic member can be sleeved thereon to prevent the film attachment elastic member from being deformed radially along the film attachment mounting rod. The film attachment elastic member is provided so as to elastically support the movable film attachment seat so that the film attachment apparatus and the battery module can form an elastic abutment. At the same time, the elastic adjustment sleeve is provided so as to adjust the distance between the film attachment mounting seat and the movable film attachment seat, thereby adjusting the elastic force of the film attachment elastic member.

In some embodiments, the film attachment apparatus includes a film attachment pressing roller movably mounted on the film attachment mounting seat along the thickness direction of the film attachment mounting seat.

In the embodiment, by the movement of the film attachment pressing roller, the film attachment of the battery module by the film attachment apparatus is not affected while enabling rolling the battery module after film attachment, thereby helping to improve the film attachment effect of the film attachment apparatus.

In some embodiments, the film attachment apparatus includes a camera apparatus mounted on the film attachment mounting seat, and the camera apparatus is electrically connected to the control apparatus.

In the embodiment, by providing the camera apparatus, on one hand, the length of the battery module at the film attachment station can be photographed to obtain the target film attachment length of the battery module, so that the film supply structure can supply an insulating film of the target film attachment length, which helps to improve the accuracy of film supply by the film supply apparatus; on the other hand, the formed insulating film at the film supply station can be photographed to determine whether the length of the formed insulating film is consistent with the target film attachment length of the battery module, thereby helping to improve the film attachment yield of the film attachment device.

In a second aspect, the present application further provides a film attachment method for the battery film attachment device as described above, wherein the battery film attachment device has a film supply station, a lifting station, and a film attachment station provided corresponding to the lifting station in a third direction, the battery film attachment device includes a conveying line, a battery positioning apparatus, a film supply apparatus, and a film attachment apparatus, the battery positioning apparatus includes a positioning base and a positioning lifting structure, and the film attachment method comprises:
a positioning step: when the conveying line transfers the tray loaded with the battery module to the lifting station, controlling the positioning lifting structure to operate to lift the battery module at the lifting station to the film attachment station;
a film supply step: controlling the film supply apparatus to operate to supply the formed insulating film to the film supply station;
a film attachment step: controlling the film attachment apparatus to operate to pick up the formed insulating film at the film supply station and attach the formed insulating film onto the battery module at the film attachment station.

In the embodiment, when the conveying apparatus conveys the tray loaded with the battery module to the film attachment station, the battery positioning apparatus is controlled to operate to position the tray loaded with the battery module to the film attachment station, and the film supply apparatus is controlled to operate to supply the formed insulating film to the film supply station. At the same time, the film attachment apparatus is controlled to operate to adsorb the formed insulating film at the film supply station and attach it onto the battery module at the film attachment station. In this way, by providing the control apparatus, the battery positioning apparatus is controlled to position the battery module to the film attachment station, and the film supply apparatus is controlled to provide the formed insulating film to the film supply station, and then the film attachment apparatus is controlled to attach the formed insulating film at the film supply station onto the battery module, thereby improving the degree of automation of the film attachment device, overcoming the shortcomings of manual operation, and greatly improving work efficiency and product quality.

Since the above-mentioned film attachment method adopts the battery film attachment device according to any one of the above-mentioned embodiments, it has at least the beneficial effects of the above-mentioned embodiments, which will not be described one by one here.

In some embodiments, before the positioning step, the film attachment method further comprises a film attachment identification step, and the film attachment identification step comprises:
acquiring film attachment information, wherein the film attachment information includes normal film attachment information indicating that the tray is loaded with the battery module requiring film attachment;
when the film attachment information is normal film attachment information, entering the positioning step.

In the embodiment, when the tray arrives at the battery positioning apparatus, the film information of the battery module on the tray is determined. When the film information of the battery module loaded on the tray is determined to be normal film information, it means that the battery module requires film attachment. At this time, the control apparatus controls the tray loaded with the battery module to enter the positioning step so as to attach the film onto the battery module that requires film attachment. In this way, before the battery positioning apparatus operates, the battery module entering the battery positioning apparatus is identified so that the battery module that requires film attachment enters the positioning step, thereby effectively improving the film attachment efficiency of the film attachment device.

In some embodiments, the acquiring film attachment information comprises:
acquiring tray information, wherein the tray information includes first tray information indicating that the tray is loaded with the battery module;
when the tray information is the first tray information, continuing to identify the module information of the battery module, wherein the module information includes the first module information indicating that the battery module requires film attachment;
when the module information is the first module information, determining that the film attachment information is normal film attachment information.

In the embodiment, after the tray enters the battery positioning apparatus, the tray information is acquired to judge whether the tray is loaded with the battery module. When the tray information is determined to be the first tray information, it means that the tray is loaded with the battery module. Then, the module information of the battery module is acquired to judge whether the battery module requires film attachment. When the module information is determined to be the first module information, it means that the battery module loaded in the tray is a battery module that requires film attachment. In this way, the normal film attachment information of the battery module is determined through the tray information and the module information, so as to identify entering the battery positioning apparatus, so that the film attachment device only attaches films onto battery modules that require film attachment, thereby helping to improve the film attachment efficiency of the film attachment device.

In some embodiments, the battery positioning apparatus includes a positioning clamping structure and a tray positioning structure;
the positioning step comprises:
after the conveying line transfers the tray loaded with the battery module to the lifting station, controlling the tray positioning structure to operate to position the battery module to the lifting station, and then controlling the positioning clamping structure to operate to clamp the battery module onto the positioning base.

In the embodiment, after the tray enters the battery positioning apparatus, the tray positioning structure is first controlled to act so as to position the tray loaded with the battery module to a preset positioning position, and then the positioning clamping structure is controlled to operate to clamp the battery module onto the positioning base after the battery module is positioned to the preset positioning position, which reduces the risk of movement of the battery module during subsequent film attachment, thereby facilitating subsequent film attachment of the battery module.

In some embodiments, the battery positioning apparatus includes a battery cell unlocking structure and a positioning leveling structure;
the positioning step further comprises:
after the positioning clamping structure clamps the battery module and before the positioning lifting structure perform lifting, controlling the battery cell unlocking structure to operate to drive the clamping plate on the tray to move toward the outside of the tray along the first direction, so that the tray is released from clamping and locking the battery module; and after the positioning lifting structure lifts the battery module to the film attachment station, controlling the positioning leveling structure to operate to make the two sides of the battery module along the second direction flush.

In the embodiment, after the positioning clamping structure clamps the battery module, the battery cell unlocking structure is first controlled to operate to enable the battery unlocking member to compress the locking spring on the tray so that the clamping plate can move along the first direction toward the outside of the tray to release the tray from clamping and fixing the battery module. Then, the positioning lifting structure is controlled to operate to carry the battery module, which helps to reduce the clamping force on the battery module applied by the positioning clamping structure, thereby facilitating separation of the battery module from the tray. Then, the positioning leveling structure is controlled to operate to level the two sides of the battery module along the width direction, thereby facilitating subsequent film attachment by the film attachment apparatus.

In some embodiments, the film attachment apparatus includes a camera apparatus, and the film supply apparatus includes a separation structure, a film pulling structure, and a cutting structure;
the film supply step comprises:
controlling the camera apparatus to take a picture of the battery module to determine the target film attachment length of the battery module, then controlling the film pulling structure and the separation structure to operate to separate and pull out an insulating film of the target film attachment length, and then controlling the cutting structure to operate to cut the insulating film pulled out to form the formed insulating film.

In the embodiment, after the battery module enters the battery positioning apparatus, the camera apparatus is controlled to take a picture of the battery module at the film attachment station to obtain the target film attachment length of the battery module, then the film pulling structure and the separation structure are controlled to operate to separate the insulating film roll into an insulating film and a release paper, and pull out an insulating film of the target length, and then the cutting structure is controlled to operate to cut the insulating film pulled out to form the formed insulating film of the target length.

In some embodiments, the film supply apparatus further includes a film pulling clamping structure;
the film supply step comprises:
after the film pulling structure pulls out the insulating film of the target film attachment length and before the cutting structure cuts, controlling the film pulling clamping structure to operate to clamp the insulating film pulled out.

In the present embodiment, after the film pulling structure pulls out the insulating film of the target film attachment length and before the cutting structure cuts, the film pulling structure is controlled to operate to clamp the insulating film between the separation structure and the film pulling structure to clamp the two ends of the insulating film. This not only helps the cutting structure to cut the insulating film pulled out, but also reduces the probability of the insulating film shrinking into a clump, thereby helping the film pulling structure to continue pulling films subsequently.

In some embodiments, the film attachment apparatus includes a mechanical arm, a film attachment mounting seat mounted on the mechanical arm, and an adsorption apparatus mounted on the film attachment mounting seat;
the film attachment step comprises:
controlling the mechanical arm to move to the film supply station, then controlling the adsorption apparatus to operate to adsorb the formed insulating film, and then controlling the mechanical arm to move to the film attachment station to attach the formed insulating film onto the battery module.

In the embodiment, the mechanical arm is first controlled to move to the film supply station to adsorb the formed insulating film at the film supply station, and then the mechanical arm is controlled to move to the film attachment station to attach the formed insulating film onto the battery module at the film attachment station.

In some embodiments, the film attachment apparatus further includes a film attachment pressing roller;
the film attachment step further comprises:
after the formed insulating film is attached to the battery module, allowing the film attachment pressing roller to move to abut against the formed insulating film, and then controlling the mechanical arm to move to roll the battery module attached with the formed insulating film.

In the embodiment, after the formed insulating film is attached to the battery module, the film attachment pressing roller is first controlled to move so that the film attachment pressing roller protrudes from the adsorption apparatus, and then the mechanical arm is controlled to move to roll the battery module attached with the formed insulating film, which helps to improve the film attachment effect of the film attachment apparatus.

In some embodiments, after the film attachment step, the film attachment method further comprises a detection step, and the detection step comprises:
acquiring an actual film attachment range on at least one of the battery modules;
determining whether the film attachment of the battery module meets the requirements according to the actual film attachment range.

In the embodiment, after the film attachment of the battery module is completed, it is necessary to determine whether the film attachment of the battery module meets the requirements. Therefore, the actual film attachment range is acquired to judge the film attachment state of the battery module. In this way, by acquiring at least one actual film attachment range, the interference of external factors can be reduced, which is conducive to accurately determining whether the film attachment of the battery module meets the requirements, so as to classify the battery modules to prevent the battery modules with unqualified film attachment from being transferred to subsequent processing stations.

In some embodiments, the determining whether the film attachment of the battery module meets the requirements according to the actual film attachment range comprises:
when at least one of the actual film attachment ranges meets the preset film attachment range, determining that the film attachment of the battery module meets the requirements;
when the actual film attachment range does not meet the preset film attachment range, continuing to manually determine whether the film attachment of the battery module meets the requirements.

In the embodiment, since the control apparatus is greatly affected by the movement of the mechanical arm or the camera apparatus itself when judging the film attachment state of the battery module, there may be certain misjudgments. Therefore, if any one of the multiple actual film attachment ranges meets the preset film attachment range, it means that the film attachment of the battery module meets the requirements. If all the actual film attachment ranges do not meet the preset film attachment range, at this time, the film attachment state of the battery module is manually judged to reduce the probability of mechanical misjudgment.

In some embodiments, when all the actual film attachment range do not meet the preset film attachment range, it is manually determined whether the film attachment of the battery module meets the requirements, which comprises:
when it is manually determined that the film attachment of the battery module meets the requirements, determining that the film attachment state of the battery module meets the requirements;
when it is manually determined that the film attachment of the battery module does not meet the requirements, determining that the film attachment of the battery module does not meet the requirements.

In the embodiment, when it is manually determined that the film attachment of the battery module meets the requirements, it means that the film attachment of the battery module meets the requirements. At this time, it is determined that the film attachment state of the battery module meets the requirements. When it is manually determined that the film attachment of the battery module does not meet the requirements, it means that the film attachment of the battery module does not meet the requirements. At this time, it is determined that the film attachment state of the battery module does not meet the requirements. In this way, the film attachment state of the battery module is first judged mechanically, and then the film attachment state of the battery module is manually judged. This can not only greatly reduce the workload of manual judgment and reduce work intensity, but also effectively reduce the probability of mechanical or manual misjudgment, which is conducive to accurate judgment of the film attachment state of the battery module.

In some embodiments, before the film attachment step, the film attachment method further comprises a film supply identification step, and the film supply identification step comprises:
acquiring film supply information at the film supply station, wherein the film supply information includes normal film supply information indicating that the formed insulating film meets the film attachment length of the battery module;
when the film supply information is normal film supply information, entering the film attachment step.

In the present embodiment, when a formed insulating film is formed at the film supply station, the film supply information at the film supply station is acquired to judge whether the length of the formed insulating film at the film supply station meets the film attachment length required by the battery module. When the film supply information is determined to be normal film supply information, it indicates that the length of the formed insulating film at the film supply station meets the film attachment length required by the battery module. In this way, the film supply information is used to identify the length of the formed insulating film at the film supply station to ensure that the length of the formed insulating film at the film supply station meets the film attachment length required by the battery module, thereby helping to improve the film attachment qualification rate of the battery film attachment device.

The above description is only an overview of the technical solution of the present application. In order to better understand the technical means of the present application and thus implement them according to the contents of the specification, and in order to make the aforementioned and other objectives, features and advantages of the present application more obvious and understandable, a detailed description of the present application is given hereinafter.

### BRIEF DESCRIPTION OF THE DRAWINGS

To describe the technical solutions in the embodiments of the present application or in the prior art more clearly, the following briefly describes the accompanying drawings required for describing the embodiments or the prior art. Apparently, the accompanying drawings in the following description show merely some of the embodiments of the present application, and those of ordinary skill in the art may still derive other drawings from the structures illustrated in these accompanying drawings without creative efforts.
FIG. 1 is a three-dimensional structural schematic diagram of an example of a battery film attachment device provided in the present application;
FIG. 2 is a three-dimensional structural schematic diagram of the battery positioning apparatus in FIG. 1;
FIG. 3 is a three-dimensional structural schematic diagram of the battery positioning apparatus (with the positioning leveling structure hidden) in FIG. 1;
FIG. 4 is a three-dimensional structural schematic diagram of the positioning lifting structure in FIG. 1;
FIG. 5 is a three-dimensional structural schematic diagram of the battery cell unlocking structure in FIG. 1;
FIG. 6 is a three-dimensional structural schematic diagram of the tray in FIG. 1;
FIG. 7 is a three-dimensional structural schematic diagram of the film supply apparatus in FIG. 1;
FIG. 8 is a three-dimensional structural schematic diagram of the film attachment apparatus in FIG. 1;
FIG. 9 is a structural partial schematic top view of the film attachment apparatus in FIG. 1;
FIG. 10 is a schematic flowchart of a film attachment method provided in the present application;
FIG. 11 is a schematic flowchart of a film attachment identification step of a film attachment method provided in the present application;
FIG. 12 is a schematic flowchart of a positioning step of a film attachment method provided in the present application;
FIG. 13 is a schematic flowchart of a film supply step of a film attachment method provided in the present application;
FIG. 14 is a schematic flowchart of a film attachment step of a film attachment method provided in the present application;
FIG. 15 is a schematic flowchart of a detection step of a film attachment method provided in the present application;
FIG. 16 is a schematic flowchart of a film supply identification step of a film attachment method provided in the present application.

**Description of reference numerals:**

| Reference numeral | Name | Reference numeral | Name |
|---|---|---|---|
| 100 | Battery film attachment device | 221 | Film supply tray |
| 1 | Battery positioning apparatus | 23 | Separation structure |
| 11 | Positioning base | 231 | Positioning roller |
| 111 | Positioning seat body | 232 | Winding roller |
| 112 | Positioning mounting seat | 24 | Film pulling structure |
| 113 | Positioning leveling seat | 241 | Film pulling seat |
| 12 | Positioning clamping structure | 242 | Film pulling clamping portion |
| 121 | Positioning clamping portion | 25 | Film pulling clamping structure |
| 122 | First positioning clamping driving apparatus | 251 | Film pulling clamping portion |
| 13 | Positioning leveling structure | 252 | Film pulling clamping driving structure |
| 131 | Positioning leveling portion | 26 | Film supply carrying seat |
| 132 | First positioning leveling driving apparatus | 3 | Film attachment apparatus |
| 14 | Positioning lifting structure | 31 | Mechanical arm |
| 141 | Positioning lifting seat | 32 | Film attachment mounting seat |
| 142 | Positioning lifting driving structure | 321 | Film attachment seat body |
| 15 | Tray positioning structure | 322 | Movable film attachment seat |
| 151 | Tray positioning seat | 323 | Film attachment buffer structure |
| 152 | Tray positioning pin | 3231 | Film attachment mounting rod |
| 153 | Tray positioning driving structure | 3232 | Film attachment elastic member |
| 16 | Battery cell unlocking structure | 3233 | Elastic adjustment sleeve |
| 161 | Battery cell unlocking member | 33 | Adsorption apparatus |
| 162 | Unlocking mounting seat | 34 | Film attachment pressing roller |
| 163 | Unlocking sliding seat | 35 | Camera apparatus |
| 164 | Unlocking driving structure | 200 | Tray |
| 1641 | First unlocking driving apparatus | 210 | Clamping plate |
| 1642 | Second unlocking driving apparatus | 220 | Locking spring |
| 2 | Film supply apparatus | 230 | Pocket hole |
| 21 | Feed base | 300 | Battery module |
| 22 | Feed structure | | |

The implementation of the objective, functional features and advantages of the present application will be further described in combination with embodiments and with reference to the accompanying drawings.

### EMBODIMENTS OF THE PRESENT APPLICATION

Embodiments of the technical solutions of the present application will be described in detail below in conjunction with the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to. the terms used herein are for the purpose of describing specific embodiments only, and are not intended to limit the present application. The terms "including" and "having" and any variations thereof in the description and claims of the present application and the aforementioned description of the drawings are intended to cover non-exclusive inclusion.

In the description of the embodiments of the present application, the technical terms "first," "second," and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the descriptions of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center," "longitudinal," "transverse," "length," "width," "thickness," "upper," "lower," "front," "back," "left," "right," "vertical," "horizontal," "top," "bottom," "inner," "outer," "clockwise," "counterclockwise," "axial," "radial," "circumferential," etc. are based on the orientation or positional relationships shown in the accompanying drawings, and are only for convenience of description of the present application and simplification of the description, rather than indicating or implying that the indicated device or element must have a specific orientation, be constructed and operate in a specific orientation, and therefore, cannot be understood as a limitation to the present application.

In the description of the embodiments of the present application, unless otherwise specified and limited, the technical terms "mounting," "connection," "connection" and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, the demand in the market is also constantly expanding. In the field of electric vehicles such as electric automobiles, power batteries, as the core components of the vehicle, are related to the safety of vehicle use. The safety of power batteries has become one of the most important criteria for considering power battery performance.

The power battery can be formed by arranging and combining a plurality of battery modules or a plurality of battery cells. In the production process, it is usually necessary to attach an insulating film to the surface of the battery module or the surface of the battery cell by using a film attachment device to prevent the battery module or the battery cell from coming into contact with the shell of the battery pack and causing a short circuit accident. However, the existing battery film attachment process is entirely completed by manual operation, which is not only time-consuming and labor-intensive, but also has low precision, making it difficult to improve production efficiency and product quality.

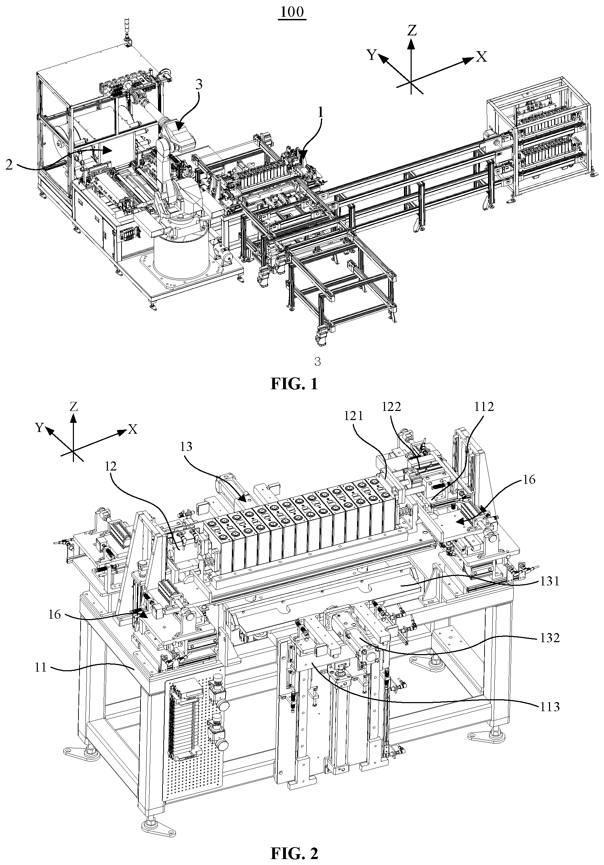

Based on the above considerations, in order to improve the shortcomings of manual operation and the problem of low production efficiency, referring to FIGS. 1, 2, 7 and 8. The present application provides a battery film attachment device 100. The battery film attachment device 100 has a film supply station, a lifting station and a film attachment station provided corresponding to the lifting station in a third direction. The battery film attachment device 100 includes a conveying line, a battery positioning apparatus 1, a film supply apparatus 2, a film attachment apparatus 3 and a control apparatus. The conveying line passes through the lifting station and the conveying line is used for conveying a battery module 300 to the lifting station. The battery positioning apparatus includes a positioning base 11 and a positioning lifting structure 14 provided on the positioning base 11. The positioning lifting structure 14 moves between the lifting station and the film attachment station, and is used to lift the battery module 300 at the lifting station to the film attachment station. The film supply apparatus 2 is provided corresponding to the film supply station, and is used to provide the formed insulating film to the film supply station. The film attachment apparatus 3 has a movement travel between the film supply station and the film attachment station, and is used to pick up the formed insulating film at the film supply station and attach the formed insulating film onto the battery module 300 at the film attachment station. The control apparatus is electrically connected to the battery positioning apparatus 1, the film supply apparatus 2 and the film attachment apparatus 3, and is used for controlling the battery positioning apparatus 1, the film supply apparatus 2 and the film attachment apparatus 3 to act.

It can be understood that the battery module 300 mentioned in the embodiments of the present application includes a plurality of battery cells, and the number of battery cells can be set to any value according to different power requirements. A plurality of battery cells may be in series, parallel or series-parallel connection to achieve a larger capacity or power.

It should be noted that in the present application, the tray 200 loaded with the battery module 300 is transported by a conveying apparatus, and the conveying apparatus is used to transfer the battery module 300 on the production line, so as to transport the battery module 300 processed in the upstream station to the film attachment station, and at the same time transport the battery module 300 that has completed the film attachment at the film attachment station to the downstream station. The conveying apparatus can have many types of structures. For example, the conveying apparatus can be a belt conveying apparatus, a roller conveying apparatus or a double-speed chain conveying apparatus. The specific structure thereof is not limited in the embodiments.

It should be noted that the battery positioning apparatus 1, the film supply apparatus 2 and the film attachment apparatus 3 can be provided at various positions, the two of which can be provided on the same base or on different bases, which is not limited in the embodiments of the present application. Among others, the battery positioning apparatus 1 has various structures. For example, the battery positioning apparatus 1 can be a pin hole positioning structure or a clamping positioning structure, etc., as long as it can position the battery module 300 in the tray 200 to the film attachment station, which is not limited in the embodiments of the present application. The film supply apparatus 2 has various structures. For example, the film supply apparatus 2 can be a belt conveying apparatus, a roller conveying apparatus or a double-speed chain conveying apparatus, etc., as long as it can provide a formed insulating film to the film supply station, which is not limited in the embodiments of the present application. The film attachment apparatus 3 has various structures. For example, the film attachment apparatus 3 may be a mechanical arm 31, or a combination of a plurality of movable structures, etc., as long as it can attach the formed insulating film at the film supply station onto the battery module 300 at the film attachment station, which is not limited in the embodiments of the present application. Furthermore, the electrical connection in the embodiments of the present application should not be narrowly understood as connection only through circuit structures, and wireless connection can also be selected. The control apparatus can control the battery positioning apparatus 1, the film supply apparatus 2 and the film attachment apparatus 3 respectively through electrical signals or wireless signals. At the same time, it can be understood that there is no necessary sequence relationship between the control of the battery positioning apparatus 1 and the film supply apparatus 2 by the control apparatus, and it needs to be determined according to the movements of the battery positioning apparatus 1 and the film supply apparatus 2. What needs to be guaranteed in the end is that before the film attachment apparatus 3 operates, the battery positioning apparatus 1 needs to position the battery module 300 to the film attachment station, and the film supply apparatus 2 needs to transport the formed insulating film to the film supply station, so that the film supply apparatus 2 can attach the formed insulating film at the film supply station onto the battery module 300 at the film attachment station.

In the technical solutions of the embodiments of the present application, the conveying line is provided to convey the battery module to the positioning base, and the positioning lifting structure is provided to drive the battery module to move to the film attachment station along the third direction, the film supply apparatus 2 is provided to provide a formed insulating film to the film supply station, the film attachment apparatus 3 is provided to attach the formed insulating film at the film supply station onto the battery module 300 at the film attachment station, and the control apparatus is provided to control the battery positioning apparatus 1, the film supply apparatus 2 and the film attachment apparatus 3 to act. In this way, the control apparatus is provided to control the battery positioning apparatus 1 to position the battery module 300 to the film attachment station, and control the film supply apparatus 2 to provide a formed insulating film to the film supply station, and then control the film attachment apparatus 3 to attach the formed insulating film at the film supply station onto the battery module 300, thereby improving the degree of automation of the film attachment device, overcoming the shortcomings of manual operation, and greatly improving work efficiency and product quality.

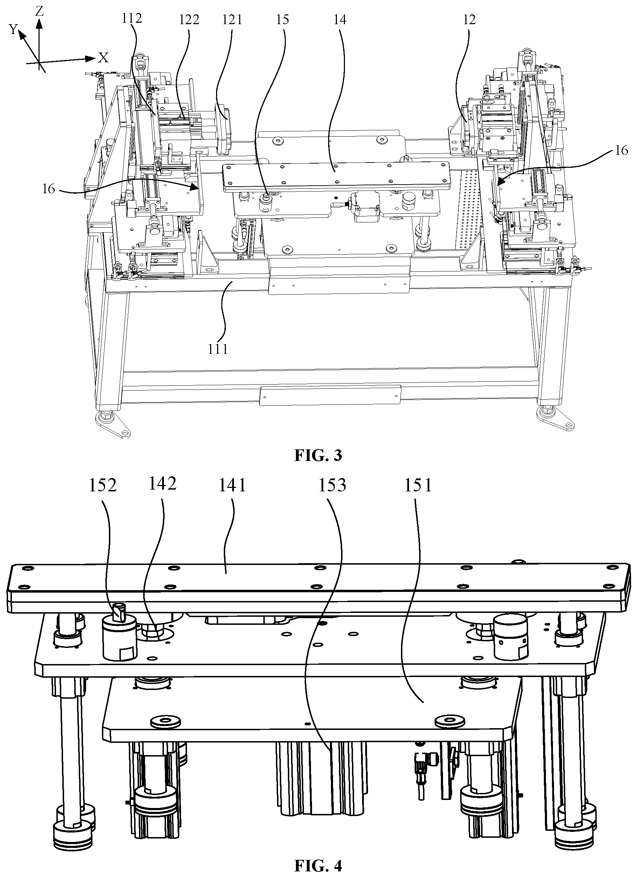

Continuing to refer to FIGS. 2 and 3, in some embodiments of the present application, the battery positioning apparatus 1 includes a positioning base 11 and a positioning clamping structure 12. The positioning clamping structure 12 includes two positioning clamping portions 121 mounted on the positioning base 11 at intervals along the first direction. At least one positioning clamping portion 121 can move along the first direction so that the two positioning clamping portions 121 can clamp and position the battery module 300 to the film attachment station.

It should be noted that the positioning base 11 is mainly used to carry the positioning clamping structure 12, and its shape can be various. For example, the positioning base 11 can be polygonal, square, or circular, etc., as long as it can carry the positioning clamping structure 12, which is not limited in the embodiments of the present application. Furthermore, there are many options for the material of the positioning base 11. For example, the positioning base 11 can be made of metal materials such as iron and aluminum, or alloy materials such as steel and aluminum alloy, or inorganic non-metallic materials such as nano-ceramics, which is not limited in the embodiments of the present application.

It can be understood that the first direction can be the front-to-back direction, or the left-to-right direction, etc., which is not limited in the embodiments of the present application. Specifically, the first direction is the X direction as shown in the figure. In addition, there are many types of positioning clamping portions 121. For example, the positioning clamping portion 121 can be a positioning clamping block, a positioning clamping plate, etc., as long as it can be used to clamp the battery module 300, which is not limited in the embodiments of the present application. Furthermore, of the two positioning clamping portions 121, one of the positioning clamping portions 121 may be movable, or both of the positioning clamping portions 121 may be movable, which is not limited in the embodiments of the present application. In addition, there are various numbers of battery modules, and there may be one battery module or a plurality of battery modules provided along the first direction, which is not limited in the embodiments of the present application.

In the embodiment, the positioning base 11 is provided to mount the positioning clamping structure 12, and two positioning clamping portions 121 are provided to clamp and position the battery module 300 onto the positioning base 11. In this way, by providing the positioning clamping structure 12, after the battery module 300 is transferred to the battery positioning apparatus 1, the battery module 300 is clamped and positioned onto the positioning base 11, thereby reducing the risk of movement of the battery module 300 during subsequent film attachment, thereby facilitating subsequent film attachment of the battery module 300.

Continuing to refer to FIGS. 2 and 3, in some embodiments of the present application, the battery positioning apparatus 1 includes a positioning lifting structure 14 for driving the battery module 300 to move to the film attachment station along the third direction. The positioning base 11 includes a positioning seat body 111 and two positioning mounting seats 112 movably mounted on the positioning seat body 111 along the third direction. The two positioning clamping portions 121 are respectively mounted on the two positioning mounting seats 112.

It should be noted that the third direction can be the up-down direction, or it can be a direction extending along the up-down direction and having a certain angle with the up-down direction, which is not limited in the embodiments of the present application. Specifically, the third direction is the Z direction as shown in the figure. In addition, since the battery module 300 is loaded in the tray 200 and translated to the battery positioning apparatus 1 by the conveying apparatus, if the battery module 300 is directly attached with a film after the battery module 300 is clamped and positioned by the positioning clamping structure 12, the film attachment apparatus 3 is also easy to interfere with other structures on the positioning base 11. In the present application, after the two positioning clamping portions 121 clamp and position the battery module 300, the two positioning mounting seats 112 move upward to move the battery module 300 to the film attachment station to facilitate subsequent film attachment of the battery module 300.

In the embodiment, two mounting seats are provided so that the two positioning clamping portions 121 can move along the third direction, so as to transfer the battery module 300 to the film attachment station, thereby facilitating subsequent film attachment of the battery module 300.

In some embodiments of the present application, the positioning clamping structure 12 further includes a first positioning clamping driving apparatus 122 provided on the positioning base 11, and the first positioning clamping driving apparatus 122 is drivably connected to the positioning clamping portion 121 to drive the positioning clamping portion 121 to move along the first direction.

It should be noted that there are many types of first positioning clamping driving apparatuses 122. For example, the first positioning clamping driving apparatus 122 can be an air cylinder, an oil cylinder, an electric push rod, etc., which is not limited in the embodiments of the present application. Specifically, the first positioning clamping driving apparatus 122 is an air cylinder with a lock so as to accurately control the moving position of the positioning clamping portion 121, thereby accurately controlling the clamping force of the positioning clamping structure 12 and reducing the possibility of excessive or insufficient clamping force.

In the embodiment, the first positioning clamping driving apparatus 122 is provided to drive the positioning clamping portion 121 to move, so that the positioning clamping structure 12 can clamp and position the battery module 300 onto the positioning base 11.

In some embodiments of the present application, the positioning clamping structure 12 further includes a second positioning clamping driving apparatus provided on the positioning seat body 111, and the second positioning clamping driving apparatus is drivably connected to the positioning mounting seat 112 to drive the positioning mounting seat 112 to move along the third direction, wherein the first positioning clamping driving apparatus 122 is provided on the positioning mounting seat 112.

It should be noted that there are many types of second positioning clamping driving apparatuses. For example, the second positioning clamping driving apparatus can be an air cylinder, an oil cylinder, an electric push rod, etc., which is not limited in the embodiments of the present application.

In the embodiment, the second positioning clamping driving apparatus is provided to drive the positioning mounting seat 112 to move so as to transfer the battery module 300 to the film attachment station, thereby facilitating subsequent film attachment of the battery module 300.

Continuing to refer to FIG. 2, in some embodiments of the present application, the battery positioning apparatus 1 further includes a positioning leveling structure 13. The positioning leveling structure 13 includes two positioning leveling portions 131 provided at intervals along the second direction. Each positioning leveling portion 131 can move along the second direction so that the two positioning leveling portions 131 can clamp and level the battery module 300, wherein the first direction intersects with the second direction.

It should be noted that the first direction and the second direction can be the front-to-back direction, or the left-to-right direction, etc., which is not limited in the embodiments of the present application. For example, the first horizontal direction is the front-to-back direction, and correspondingly, the second horizontal direction is the left-to-right direction, or the first direction is the left-to-right direction, and correspondingly, the second horizontal direction is the front-to-back direction. Specifically, the first direction is the X direction as shown in the figure, and the second direction is the Y direction as shown in the figure. There are many types of positioning leveling portions 131. For example, the positioning leveling portion 131 can be a positioning leveling block, a positioning leveling plate, etc., as long as it can be used to level the two sides of the battery module 300 in the width direction so that the two sides of the battery module in the width direction can be flush, which is not limited in the embodiments of the present application. In particular, since the positioning leveling structure 13 is leveled by being clamped by the two positioning leveling portions 131, after the positioning leveling structure 13 is leveled, the two positioning leveling portions 131 need to exit the leveling positions respectively, otherwise the film attachment apparatus 3 cannot perform film attachment on the battery module 300, so the two positioning clamps are both movably provided.

In the embodiment, two positioning leveling portions 131 are provided to enable the positioning leveling structure 13 to level the two sides of the battery module 300 in the width direction so that the sides of the battery module 300 are flush, and the two positioning leveling portions 131 can respectively exit the leveling position, thereby facilitating subsequent film attachment on the two sides of the battery module 300 in the width direction.

Continuing to refer to FIG. 2, in some embodiments of the present application, the battery positioning apparatus 1 includes a positioning lifting structure 14 for driving the battery module 300 to move to the film attachment station along the third direction. The positioning base 11 includes a positioning seat body 111 and two positioning leveling seats 113 movably mounted on the positioning base 11 along the third direction. The two positioning leveling portions 131 are respectively mounted on the two positioning leveling seats 113.

It should be noted that the battery module 300 is not leveled until it moves upward to the film attachment station. To this end, in the embodiment, two positioning leveling seats 113 are provided to enable the two positioning leveling portions 131 to move upward, so that the positioning leveling structure 13 can be matched with the structure of the positioning clamping member, so as to level the battery module 300 and make the two sides of the battery module 300 along the width direction flush, thereby facilitating subsequent film attachment of the battery module 300.

In some embodiments of the present application, the positioning leveling structure 13 further includes two first positioning leveling driving apparatuses 132 provided on the positioning base 11, and the two first positioning clamping driving apparatuses 132 are drivably connected to the two positioning leveling portions 131 to drive the positioning leveling portions 131 to move along the second direction.

It should be noted that there are many types of first positioning leveling driving apparatuses 132. For example, the first positioning leveling apparatus can be an air cylinder, an oil cylinder, an electric push rod, etc., which is not limited in the embodiments of the present application. Specifically, the first positioning leveling driving apparatus 132 is an air cylinder with a lock so as to accurately control the moving position of the positioning leveling portion 131, thereby accurately controlling the clamping force of the positioning leveling structure 13 and reducing the possibility of excessive or insufficient clamping force. Furthermore, there are various driving modes for the two positioning leveling portions 131. For example, the two positioning leveling portions 131 may be driven simultaneously by a driving apparatus, or may be driven separately by two driving apparatuses, which is not limited in the embodiments of the present application.

In the embodiment, if the two positioning leveling portions 131 are driven by one driving apparatus, an additional transmission structure needs to be provided, and the structure is relatively complicated. Therefore, two first positioning leveling driving apparatuses 132 are provided to drive the two positioning leveling portions 131 separately to avoid the two positioning leveling portions 131 affecting each other.

In some embodiments of the present application, the positioning leveling structure 13 further includes a second positioning leveling driving apparatus provided on the positioning seat body 111, the second positioning leveling driving apparatus is drivably connected to the positioning leveling seat 113 to drive the positioning leveling seat 113 to move along the third direction, wherein the first positioning leveling driving apparatus 132 is provided on the positioning mounting seat 112.

It should be noted that there are many types of second positioning leveling driving apparatuses. For example, the second positioning leveling driving apparatus can be an air cylinder, an oil cylinder, an electric push rod, etc., which is not limited in the embodiments of the present application.

In the embodiment, the second positioning leveling driving apparatus is provided to drive the positioning leveling seat 113 to move so as to be matched with the positioning clamping structure 12 to level the battery module 300 at the film attachment station, so that the two sides of the battery module 300 along the width direction are flush, thereby facilitating subsequent film attachment of the battery module 300.

Continuing to refer to FIGS. 2 to 4, in some embodiments of the present application, the battery positioning apparatus 1 includes a positioning base 11 and a positioning lifting structure 14. The positioning lifting structure 14 is provided on the positioning base 11 to drive the battery module 300 to move to the film attachment station along the third direction.

It should be noted that the positioning lifting structure 14 may be used to lift the tray 200 loaded with the battery module 300, or may be used to lift only the battery module 300, etc., which is not limited in the embodiments of the present application. In addition, in theory, by providing the positioning clamping structure 12, the battery module 300 can be moved upward to the film attachment station, but a large clamping force is required. If the clamping force is small, the battery module 300 is easy to fall, and if the clamping force on the battery module 300 is too large, the battery module 300 is easily damaged. Therefore, the positioning lifting structure 14 is provided to support the battery module 300 and reduce the clamping force of the positioning clamping structure 12.

In the embodiment, the positioning lifting structure 14 is provided to carry the battery module 300, which helps to drive the battery to move upward to the film attachment station. Compared with driving the battery module 300 to move upward by the positioning clamping structure 12, this can effectively reduce the clamping force on the battery module 300 applied by the positioning clamping structure 12, thereby reducing the risk of the battery module 300 being damaged due to excessive clamping force.

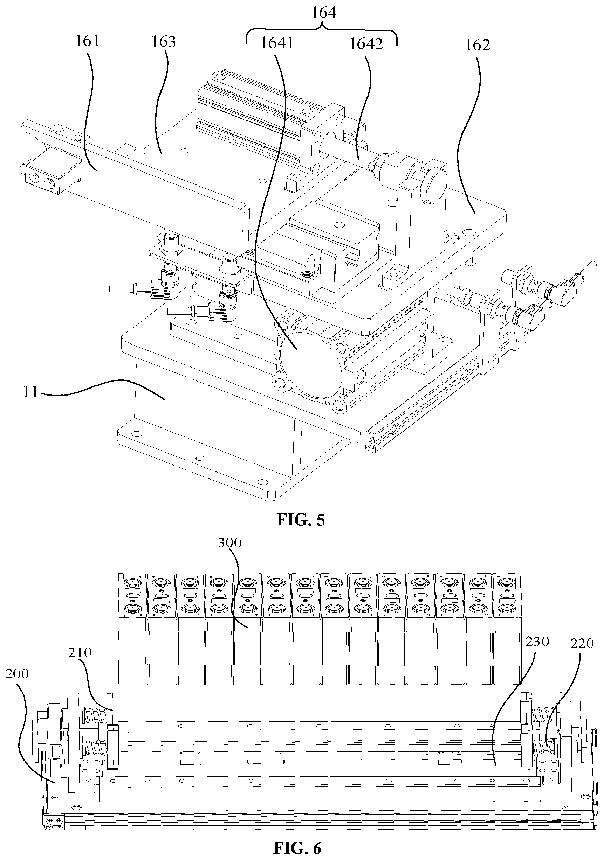

Continuing to refer to FIGS. 4 and 6, in some embodiments of the present application, the positioning lifting structure 14 includes a positioning lifting seat 141 and a positioning lifting driving structure 142. The positioning lifting seat 141 is movably mounted on the positioning base 11 along the third direction. The positioning lifting seat 141 is used to movably pass through the pocket hole 230 in the middle of the tray 200. The positioning lifting driving structure 142 is provided on the positioning base 11 and is drivably connected to the positioning lifting seat 141 to drive the positioning lifting seat 141 to move along the third direction.

It should be noted that the positioning lifting seat 141 is mainly used to carry the battery module 300, and its material is various. For example, the positioning lifting seat 141 can be made of metal materials such as iron and aluminum, or polymer materials such as plastic, or inorganic non-metallic materials such as nano-ceramics, as long as it has a certain strength to carry the battery module 300, which is not limited in the embodiments of the present application. Furthermore, the positioning lifting driving structure 142 can be an air cylinder, an oil cylinder, an electric push rod, etc., which is not limited in the embodiments of the present application. In particular, the tray 200 is provided with a pocket hole 230 to enable the positioning lifting seat 141 to pass through the tray 200 to directly lift the battery module 300, so that the positioning lifting structure 14 only lifts the battery module 300 to separate the battery module 300 from the tray 200, so as to reduce the load borne by the positioning lifting seat 141.

In the embodiment, since the battery module 300 is loaded in the tray 200 and transferred to the battery positioning apparatus 1 by the conveying apparatus, the lower part of the battery module 300 is usually blocked by the tray 200, leading to the fact that the lower part of the battery module 300 cannot be attached with a film. Therefore, in the present application, the positioning lifting seat 141 is provided to carry the load of the battery module 300, and the positioning lifting driving structure 142 is provided to drive the positioning lifting seat 141 to move along the third direction to separate the battery module 300 from the tray 200 so as to transfer the battery module 300 to the film attachment station.

In some embodiments of the present application, the positioning lifting structure 14 further includes a positioning lifting guide structure. The positioning lifting guide structure includes a positioning lifting hole and a positioning lifting rod that are mutually matched, and the positioning lifting hole and the positioning lifting rod are respectively provided on the positioning lifting seat 141 and the positioning base 11.

In the embodiment, the mutually matched positioning lifting guide structures are provided so that the positioning lifting structure 14 can move linearly along the third direction, thereby helping to improve the stability of the movement of the positioning lifting seat 141.

Continuing to refer to FIGS. 2 and 3, in some embodiments of the present application, the battery positioning apparatus 1 further includes a tray positioning structure 15 provided on the positioning base 11 for positioning the tray 200 onto the positioning base 11.

It should be noted that there are various types of tray positioning structures 15, for example, the tray positioning structure 15 may be a pin hole positioning structure, or a positioning clamping structure 12, etc., which is not limited in the embodiments of the present application.

In the embodiment, the tray positioning structure 15 is provided to position the tray 200 loaded with the battery module 300 to a preset positioning position so as to facilitate subsequent film attachment of the battery module 300.

Continuing to refer to FIGS. 3 and 4, in some embodiments of the present application, the tray positioning structure 15 includes a tray positioning seat 151 and a tray positioning pin 152. The tray positioning seat 151 is movably mounted on the positioning base 11 along the third direction. The tray positioning pin 152 is provided on the tray positioning seat 151 for passing through the corresponding positioning hole on the tray 200. The tray 200 positioning driving structure 153 is provided on the positioning base 11 and is drivably connected to the tray positioning seat 151 to drive the tray positioning seat 151 to move along the third direction.

It should be noted that there are various materials for the tray positioning seat 151 and the tray positioning pin 152. For example, the tray positioning seat 151 and the tray positioning pin 152 can be made of metal materials such as iron and aluminum, or polymer materials such as plastic, or inorganic non-metallic materials such as nano-ceramics, which is not limited in the embodiments of the present application. Furthermore, there are various forming methods for the tray positioning seat 151 and the tray positioning pin 152. The tray positioning seat 151 and the tray positioning pin 152 can be integrally formed or assembled, which is not limited in the embodiments of the present application. Furthermore, the tray 200 positioning driving structure 153 can be an air cylinder, an oil cylinder, an electric push rod, etc., which is not limited in the embodiments of the present application.

In the embodiment, the tray positioning seat 151 is provided to mount the tray positioning pin 152, and the tray positioning pin 152 is provided to position the tray 200 at a preset positioning position. At the same time, the tray 200 positioning driving structure 153 is provided to drive the tray positioning seat 151 to move. This can drive the tray positioning pin 152 upward to pass through the corresponding positioning hole on the tray 200 to position the tray 200 onto the positioning base 11, and can also drive the tray positioning pin 152 downward to enable the tray 200 loaded with the battery module 300 to be transferred to the battery positioning apparatus 1.

In some embodiments of the present application, a plurality of tray positioning pins 152 are provided, and the plurality of tray positioning pins 152 are provided at intervals on the tray positioning seat 151.

It should be noted that the number of the tray positioning pins 152 can be one or more, which is not limited in the embodiments of the present application.

In the embodiment, if there is only one tray positioning pin 152, the tray 200 may rotate and the position of the tray 200 cannot be completely fixed. Therefore, a plurality of tray positioning pins 152 are provided to reduce the possibility of the tray 200 rotating, so that the tray 200 can be completely positioned on the positioning base 11.

Continuing to refer to FIGS. 2, 3 and 5, in some embodiments of the present application, the battery positioning apparatus 1 further includes a battery cell unlocking structure 16 provided on the positioning base 11. The battery cell unlocking structure 16 includes a battery cell unlocking member 161 that can move along the first direction to drive the clamping plate 210 on the tray 200 to move along the first direction toward the outside of the tray 200.

It should be noted that there are various types of battery cell unlocking members 161. For example, the battery cell unlocking member 161 may be a battery cell unlocking plate or a battery cell unlocking rod, etc., which is not limited in the embodiments of the present application. The battery cell unlocking member 161 may be made of a variety of materials. For example, the battery cell unlocking member 161 may be made of metal materials such as iron and aluminum, or polymer materials such as plastic, or inorganic non-metallic materials such as nano-ceramics, which is not limited in the embodiments of the present application. Among others, the first direction can be the front-to-back direction, or the left-to-right direction, etc., which is not limited in the embodiments of the present application. Specifically, the first direction is the X direction as shown in the figure. In order to facilitate film attachment of the battery module 300, the first direction should be consistent with the length extension direction of the battery module 300. In addition, in order to prevent the battery module 300 from being separated from the tray 200 during the transfer process, the tray 200 is usually provided with a clamping structure to clamp the battery module 300 to the tray 200. However, since the lower part of the battery module 300 is usually blocked by the tray 200, the lower part of the battery module 300 cannot be attached with a film. Therefore, it is necessary to separate the tray 200 from the battery module 300 so that the positioning lifting structure 14 can lift the battery module 300 alone. In order to separate the tray 200 from the battery module 300, it is necessary to release the tray 200 from clamping and locking the battery module 300.

In the embodiment, the battery cell unlocking member 161 is provided to be movable so that the battery unlocking member can compress the locking spring 220 on the tray 200 to enable the clamping plate 210 to move toward the outside of the tray 200 along the first direction, so as to release the tray 200 from clamping and fixing the battery module 300, which helps to separate the battery module 300 from the tray 200 subsequently.

Continuing to refer to FIG. 5, in some embodiments of the present application, the battery cell unlocking structure 16 further includes an unlocking mounting seat 162, an unlocking sliding seat 163 and an unlocking driving structure 164. The unlocking mounting seat 162 is slidably mounted on the positioning base 11 along the first direction, the unlocking sliding seat 163 is slidably mounted on the unlocking mounting seat 162 along the second direction, and the battery cell unlocking member 161 is provided on the unlocking sliding seat 163. The unlocking driving structure 164 includes a first unlocking driving apparatus 1641 provided between the positioning base 11 and the unlocking mounting seat 162, and a second unlocking driving apparatus 1642 provided between the unlocking mounting seat 162 and the unlocking sliding seat 163. The first unlocking driving apparatus 1641 is drivably connected to the unlocking mounting seat 162 to drive the unlocking mounting seat 162 to move along the first horizontal direction, and the second unlocking driving apparatus 1642 is drivably connected to the unlocking sliding seat 163 to drive the unlocking sliding seat 163 to move along the second direction, wherein the first direction intersects with the second direction.

It should be noted that the first direction and the second direction can be the front-to-back direction, or the left-to-right direction, etc., which is not limited in the embodiments of the present application. For example, the first horizontal direction is the front-to-back direction, and correspondingly, the second horizontal direction is the left-to-right direction, or the first direction is the left-to-right direction, and correspondingly, the second horizontal direction is the front-to-back direction. Specifically, the first direction is the X direction as shown in the figure, and the second direction is the Y direction as shown in the figure. Furthermore, there are many materials for the unlocking sliding seat 163 and the unlocking mounting seat 162. For example, the unlocking sliding seat 163 and the unlocking mounting seat 162 can be made of metal materials such as iron and aluminum, or polymer materials such as plastic, or inorganic non-metallic materials such as nanoceramics, which is not limited in the embodiments of the present application. The first unlocking driving apparatus 1641 and the second unlocking driving apparatus 1642 can be an air cylinder, an oil cylinder, an electric push rod, etc., which is not limited in the embodiments of the present application.

In the embodiment, when it is necessary to unlock the battery module 300 from the tray 200, the second unlocking driving apparatus 1642 drives the unlocking sliding seat 163 to move along the second direction, so as to drive the battery cell unlocking member 161 to move along the second direction, so that the battery cell unlocking member 161 can be inserted into the tray 200 along the second direction. Then the first unlocking driving apparatus 1641 drives the unlocking mounting seat 162 to move along the first direction, so as to drive the battery cell unlocking member 161 to move along the first direction, so that the battery cell unlocking member 161 can compress the locking spring 220 on the tray 200 to enable the clamping plate 210 on the tray 200 to move toward the outside of the tray 200 along the first direction, thereby releasing the tray 200 from clamping and locking the battery module 300. In this way, the unlocking sliding seat 163 is provided to enable the battery cell unlocking member 161 to move along the second direction, and the unlocking mounting seat 162 is provided to enable the battery cell unlocking member 161 to move along the first direction. At the same time, the unlocking driving structure 164 is provided to drive the unlocking mounting seat 162 and the unlocking sliding seat 163 to move, so that the battery cell unlocking member 161 can release the tray 200 from clamping and locking the battery module 300.

In some embodiments of the present application, a plurality of battery cell unlocking structures 16 are provided, and the plurality of battery cell unlocking structures 16 are provided at intervals along the first direction and/or the second direction to respectively correspond to a plurality of locking springs 220 of the tray 200.

In the embodiment, a plurality of battery cell unlocking structures 16 are provided to compress the corresponding locking springs 220 on the tray 200 so that the clamping plate 210 on the tray 200 can translate, thereby facilitating the clamping plate 210 on the tray 200 to slide along a first level.

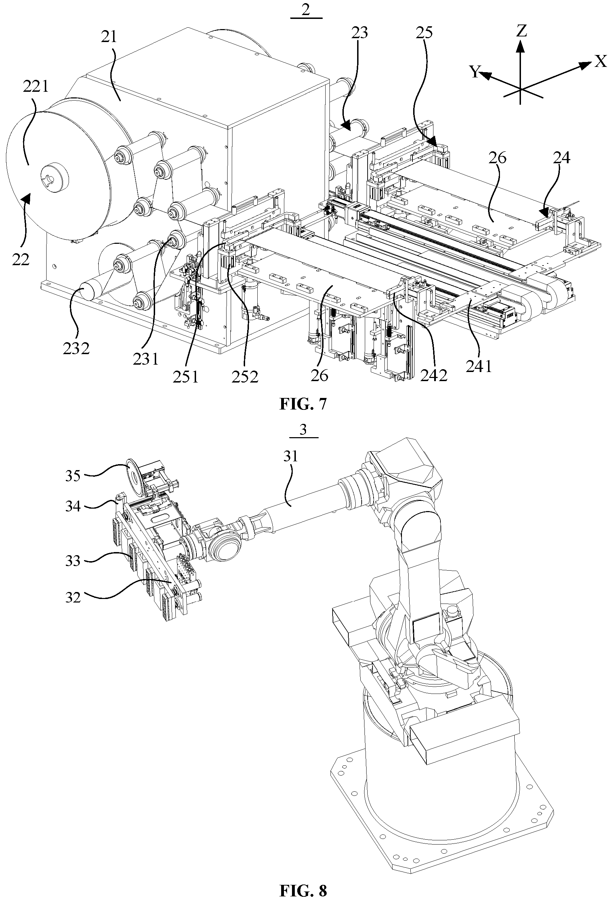

Continuing to refer to FIG. 7, in some embodiments of the present application, the film supply apparatus 2 includes a feed base 21, a feed structure 22, a separation structure 23, a film pulling structure 24 and a cutting structure (not shown). The feed structure 22 includes a film supply tray 221 provided on the feed base 21, and the film supply tray 221 is used to mount an insulating film roll. The separation structure 23 is provided on the feed base 21 to separate the insulating film roll into an insulating film and a release paper. The film pulling structure 24 includes a film pulling seat 241 mounted on the feed base 21, and two film pulling clamping portions 242 mounted on the film pulling seat 241. The distance between the two film pulling clamping portions 242 is adjustable to clamp or release the insulating film. The film pulling seat 241 is movably provided along the first direction to pull the insulating film to the film supply station. The cutting structure includes a cutting knife provided on the feed base 21 to cut the insulating film to form a formed insulating film at the film supply station.

It should be noted that the first direction may be the front-to-back direction, or the left-to-right direction, etc., which is not limited in the embodiments of the present application. Specifically, the first direction is the X direction as shown in the figure. In addition, the film supply base is mainly used to facilitate mounting the feed structure 22, the separation structure 23, the film pulling structure 24 and the cutting structure. Specifically, there are various types of separation structures 23. The separation structure 23 can be to separate the insulating film and the release paper through two separation rollers, or to separate the insulating film and the release paper through two clamping structures, etc., which is not limited in the embodiments of the present application.

It can be understood that the film pulling structure 24 can pull out insulating films of different lengths as needed, so that the formed insulating film resulting from cutting can be matched with the film attachment length of the battery module 300, wherein the film pulling seat 241 is mainly used to pull out insulating films of required lengths, and can be made of various materials. The film pulling seat 241 can be made of metal alloys such as steel and aluminum alloy, or inorganic non-metallic materials such as nano-ceramics, or polymer materials such as plastics. The embodiments of the present application do not impose any limitation in this respect. There are many ways to adjust the distance between the two film pulling clamping portions 242. It can be adjusted by moving one film pulling clamping portion 242 or by moving two film pulling seats 241, which is not limited in the embodiments of the present application. Furthermore, there are many types of cutting knives, and the cutting knife can be a machined cutting tool or a laser knife, etc., as long as it can cut the insulating film pulled out, which is not limited in the embodiments of the present application.

In the present embodiment, the feed base 21 is provided to mount the feed structure 22, the separation structure 23, the film pulling structure 24 and the cutting structure; the feed tray is provided to provide an insulating film roll; the separation structure 23 is provided to separate the insulating film roll into an insulating film and a release paper; the film pulling structure 24 is provided to pull out an insulating film of a target length as required; the cutting structure is provided to form a formed insulating film of target length, so that the length of the formed insulating film can be matched with the film attachment length of the battery module 300, thereby helping to improve the versatility of the film supply apparatus 2.

In some embodiments of the present application, the film supply apparatus 2 further includes a film pulling clamping structure 25 provided on the feed base 21. The film pulling clamping structure 25 is provided between the film supply tray 221 and the film pulling structure 24 to fix the insulating film onto the feed base 21.

After the film pulling structure 24 pulls out the insulating film, a pulling force is formed between the film pulling structure 24 and the separation structure 23. If the insulating film pulled out is directly cut, the cut insulating film is easy to shrink into a clump toward the separation structure 23, which is not conducive to the subsequent film pulling by the film pulling structure 24.

In the embodiment, the film pulling clamping structure 25 is provided to clamp the insulating film between the separation structure 23 and the film pulling structure 24 so as to cooperate with the film pulling structure 24 to clamp the two ends of the insulating film, which not only helps the cutting structure to cut the insulating film pulled out, but also reduces the probability of the insulating film shrinking into a clump, thereby helping the film pulling structure 24 to continue pulling films subsequently.

In some embodiments of the present application, the film pulling clamping structure 25 includes two film pulling clamping portions 251 and a film pulling clamping driving structure 252. The two film pulling clamping portions 251 are provided on the feed base 21, and at least one of the film pulling clamping portions 251 is a movable film pulling clamping portion. The movable film pulling clamping portion is movably provided along the third direction and used for clamping the insulating film onto the feed base 21. The film pulling clamping driving structure 252 is provided on the feed base 21 and is drivably connected to the movable film pulling clamping portion to drive the movable film pulling clamping portion to move along the third direction.

It should be noted that the third direction can be the up-down direction, or it can be a direction extending along the up-down direction and having a certain angle with the up-down direction, which is not limited in the embodiments of the present application. Specifically, the third direction is the Z direction as shown in the figure. In addition, one of the two film pulling clamping portions 251 can be a movable film pulling clamping portion, or both can be movable film pulling clamping portions, which is not limited in the embodiments of the present application. Furthermore, the film pulling clamping driving structure 252 can be an air cylinder, an oil cylinder, an electric push rod, etc., which is not limited in the embodiments of the present application.

In the embodiment, the film pulling clamping driving structure 252 is provided to drive the movable film pulling clamping portion to move so as to clamp or release the insulating film, which does not affect the film pulling of the film pulling structure 24 while helping the cutting structure to cut the insulating film.

In some embodiments of the present application, the separation structure 23 includes a positioning roller 231 and a winding roller 232. The positioning roller 231 is provided on the feed base 21 and is provided corresponding to the film pulling structure 24. The winding roller 232 is rotatably mounted on the feed base 21 to separate and wind up the release paper.

It should be noted that the positioning roller 231 is provided corresponding to the film pulling structure 24 so that the separated insulating film is flush with the height of the film pulling structure 24, which helps the film pulling structure 24 to directly pull out the insulating film. Furthermore, the positioning roller 231 can be rotatably mounted on the feed base 21, or can be fixedly mounted on the feed base 21, which is not limited in the embodiments of the present application. In order to reduce the film pulling resistance of the film pulling structure 24, the positioning roller 231 is rotatably mounted on the feed base 21. In addition, it is worth mentioning that the winding roller 232 and the film pulling structure 24 can act simultaneously or separately, which is not limited in the embodiments of the present application. However, in order to separate the release paper from the insulating film, the winding roller 232 will usually act synchronously with the film pulling structure 24 so as to separate the insulating film roll into the insulating film and the release paper.

In the embodiment, the positioning roller 231 is provided to make the separated insulating film flush with the height of the film pulling structure 24, thereby helping the film pulling structure 24 to pull the film. At the same time, the winding roller 232 is provided so that the release paper can be separated and the separated release paper can be wound up.

In some embodiments of the present application, the feed structure 22, the film pulling structure 24 and the cutting structure are correspondingly configured as a film supply assembly, two film supply assemblies are provided, and the two film supply assemblies are mounted at intervals on the feed base 21.

In the embodiment, the two film supply assemblies are provided so that when the film attachment apparatus 3 adsorbs the formed insulating film of one of the film supply assemblies, the other film supply assembly can provide a formed insulating film, thereby reducing the possibility of waiting of the film attachment apparatus 3 and helping to improve the film supply efficiency of the film supply apparatus 2.

In some embodiments of the present application, the film supply apparatus 2 further includes a film supply carrying seat 26 movably mounted on the feed base 21 along the third direction for carrying the insulating film pulled out.

It should be noted that, in theory, the insulating film pulled out can first be adsorbed by the film attachment apparatus 3, and then the insulating film pulled out is cut, but this method will occupy the time of the film attachment apparatus 3 and reduce the film attachment efficiency.

In the embodiment, when the film pulling structure 24 needs to pull a film, the film supply carrying seat 26 moves downward to prevent the film supply carrying from interfering with the film pulling structure 24, so that the film pulling structure 24 can pull out the insulating film. When the film pulling structure 24 does not need to pull a film, the film supply carrying seat 26 moves upward to carry the formed insulating film resulting from cutting, making it convenient for the film attachment apparatus 3 to adsorb the formed insulating film.

In some embodiments of the present application, the film supply apparatus 2 further includes a film supply driving apparatus and a film supply guide structure provided on the feed base 21. The film supply driving apparatus is drivably connected to the film supply carrying seat 26 to drive the film supply carrying seat 26 to move along the third direction. The film supply guide structure includes a film supply sliding block and a film supply sliding rail that slide in cooperation with each other. The film supply sliding rail extends along the third direction. The film supply sliding block and the film supply sliding rail are respectively provided on the film supply carrying seat 26 and the feed base 21.

It should be noted that the film supply driving apparatus can be an air cylinder, an oil cylinder, an electric push rod, etc., which is not limited in the embodiments of the present application.

In the embodiment, the film supply driving apparatus is provided to drive the film supply carrying seat 26 to move, and the film supply guide structure is provided to enable the film supply carrying seat to move linearly along the third direction, thereby helping to improve the stability of the film supply carrying seat 26.

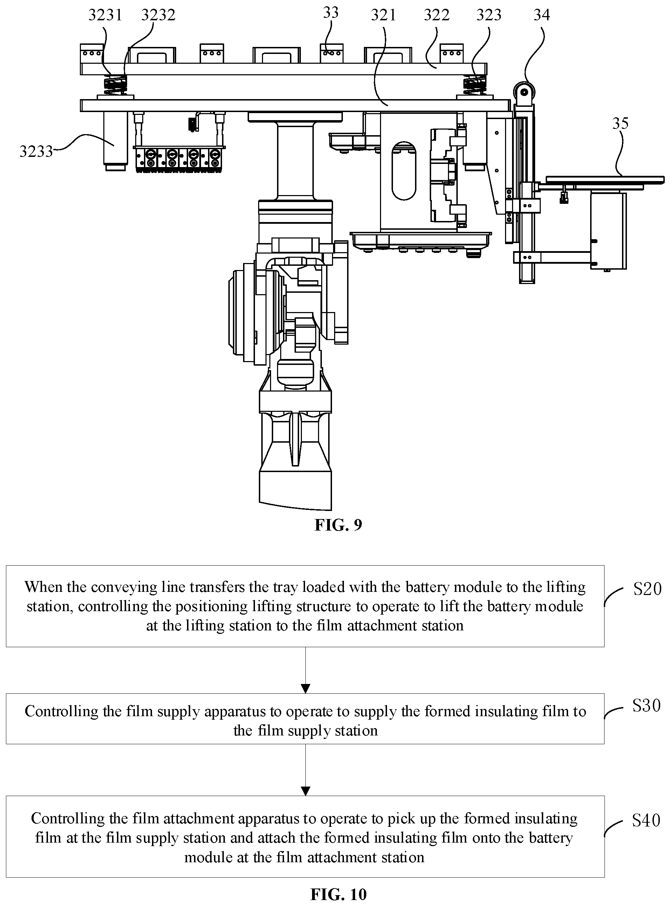

Continuing to refer to FIGS. 8 and 9, in some embodiments of the present application, the film attachment apparatus 3 includes a mechanical arm 31, a film attachment mounting seat 32 and an adsorption apparatus 33. The mechanical arm 31 has a movement travel between the film supply station and the film attachment station. The film attachment mounting seat 32 is mounted on the mechanical arm 31. The adsorption apparatus 33 is provided on the film attachment mounting seat 32, and is used to adsorb the formed insulating film on the film supply station when the mechanical arm 31 is at the film supply station, and attach the formed insulating film onto the battery module 300 at the film attachment station when the mechanical arm 31 is at the film attachment station.

It should be noted that there are various ways to connect the film attachment mounting seat 32 to the mechanical arm 31. The film attachment mounting seat 32 can be fixedly mounted on the mechanical arm 31 or detachably mounted on the mechanical arm 31, which is not limited in the embodiments of the present application. Furthermore, there are various numbers of adsorption apparatuses 33, and there may be one adsorption plate or a plurality of adsorption plates, etc., which is not limited in the embodiments of the present application. In the present application, the adsorption apparatus 33 includes a plurality of adsorption portions, and the plurality of adsorption portions are provided at intervals along the length direction of the mounting seat. Compared with providing a larger adsorption portion, providing a plurality of adsorption portions can not only ensure the adsorption effect of the adsorption apparatus 33, but also reduce the size of the adsorption portion and reduce the load of the mechanical arm 31.

In the embodiment, the film attachment mounting seat 32 is provided so as to arrange the adsorption apparatus 33, and the adsorption apparatus 33 is provided so as to adsorb the formed insulating film. Meanwhile, the mechanical arm 31 is provided to switch between the film supply station and the film attachment station so as to attach the formed insulating film at the film supply station onto the battery module 300.

Continuing to refer to FIG. 9, in some embodiments of the present application, the film attachment mounting seat 32 includes a film attachment seat body 321, a movable film attachment seat 322 and a film attachment buffer structure 323. The film attachment seat body 321 is mounted on the mechanical arm 31, and the movable film attachment seat 322 is mounted on the film attachment seat body 321 in a direction approaching or moving away from the film attachment seat body 321. The film attachment buffer structure 323 is provided between the film attachment seat body 321 and the movable film attachment seat 322 to elastically support the movable film attachment seat 322.

It should be noted that since the film attachment apparatus 3 needs to attach the formed insulating film onto the battery module 300, the film attachment apparatus 3 needs to abut against the battery module 300 when attaching the film. If the pressure of the film attachment apparatus 3 is too high, the battery module 300 may be easily damaged. If the pressure of the film attachment apparatus 3 is too low, the insulating film may not be firmly attached and may fall off easily.

In the embodiment, the film attachment seat body 321 is provided to mount the movable film attachment seat 322, and the film attachment buffer structure 323 is provided to elastically support the movable film attachment seat 322, so that the movable film attachment seat 322 and the battery module 300 can form an elastic abutment, which helps to buffer the impact of the film attachment apparatus 3.

In some embodiments of the present application, the film attachment seat body 321 is provided with a film attachment mounting hole, and the film attachment buffer structure 323 includes a film attachment mounting rod 3231, a film attachment elastic member 3232 and a film attachment elastic member 3232. One end of the film attachment mounting rod 3231 is provided on the movable film attachment seat 322, and the other end passes through the film attachment mounting hole in a direction approaching or away from the film attachment seat body 321. The film attachment elastic member 3232 is sleeved on the peripheral side of the film attachment mounting rod 3231 and is located between the film attachment seat body 321 and the movable film attachment seat 322. The elastic adjustment sleeve 3233 is threadedly sleeved on the other end of the film attachment mounting rod 3231 to adjust the distance between the film attachment seat body 321 and the movable film attachment seat 322.

It should be noted that the film attachment mounting rod 3231 is mainly used to mount the film attachment elastic member 3232, and is made of various materials. The film attachment mounting rod 3231 can be made of metal alloy materials such as steel or aluminum alloy, or inorganic non-metallic materials such as nano-ceramics, or polymer materials such as plastics. The embodiments of the present application do not impose any limitation in this respect. There are many types of film attachment elastic members 3232. For example, the film attachment elastic member 3232 can be a spring or rubber, etc., which is not limited in the embodiments of the present application. The elastic adjustment sleeve 3233 may be made of a variety of materials. The elastic adjustment sleeve 3233 may be made of metal alloy materials such as steel or aluminum alloy, or polymer materials such as plastic, which is not limited in the present embodiment of the application.

In the embodiment, the film attachment mounting rod 3231 is provided so that the film attachment elastic member 3232 can be sleeved thereon to prevent the film attachment elastic member 3232 from being deformed radially along the film attachment mounting rod 3231. The film attachment elastic member 3232 is provided so as to elastically support the movable film attachment seat 322 so that the film attachment apparatus 3 and the battery module 300 can form an elastic abutment. At the same time, the elastic adjustment sleeve 3233 is provided so as to adjust the distance between the film attachment seat body 321 and the movable film attachment seat 322, thereby adjusting the elastic force of the film attachment elastic member 3232.

In some embodiments of the present application, the film attachment apparatus 3 includes a film attachment pressing roller 34 movably mounted on the film attachment mounting seat 32 along the thickness direction of the film attachment mounting seat 32.

It should be noted that when it is not necessary to press the film on the battery module 300, the film attachment pressing roller 34 moves backward so as to be retracted on the rear side of the adsorption apparatus 33 to attach a film onto the battery module 300. When it is necessary to press the film on the battery module 300, the film attachment pressing roller 34 moves forward so that the film attachment pressing roller 34 protrudes from the adsorption apparatus 33 so as to roll the battery module 300 after film attachment.

In the embodiment, by the movement of the film attachment pressing roller 34, the film attachment of the battery module 300 by the film attachment apparatus 3 is not affected while enabling rolling the battery module 300 after film attachment, thereby helping to improve the film attachment effect of the film attachment apparatus 3.

Continuing to refer to FIGS. 8 and 9, in some embodiments of the present application, the film attachment apparatus 3 includes a camera apparatus 35 mounted on the film attachment mounting seat 32. The camera apparatus 35 is electrically connected to the control apparatus.

It should be noted that the camera apparatus 35 can be provided as a structure including a charge coupled device (CCD) camera. Exemplarily, when the film attachment apparatus 3 is at the film attachment station, the camera apparatus 35 can take a picture of the length of the battery module 300 at the film attachment station so as to obtain the target film attachment length of the battery module 300. The control apparatus controls the film pulling structure 24 of the film supply apparatus 2 to pull the film to pull out a formed insulating film of the target film attachment length, so that the feed apparatus can supply the film according to the actual film attachment state of the battery module 300. When the film attachment apparatus 3 is at the film supply station, the camera apparatus 35 can take a picture of the formed insulating film at the film supply station to determine whether the length of the formed insulating film is consistent with the target film attachment length of the battery module 300.

In the embodiment, by providing the camera apparatus 35, on one hand, the length of the battery module 300 at the film attachment station can be photographed to obtain the target film attachment length of the battery module 300, so that the film supply structure can supply an insulating film of the target film attachment length, which helps to improve the accuracy of film supply by the film supply apparatus 2; on the other hand, the formed insulating film at the film supply station can be photographed to determine whether the length of the formed insulating film is consistent with the target film attachment length of the battery module 300, thereby helping to improve the film attachment yield of the film attachment device.

Based on the above hardware structure, the present application further provides a film attachment method for a battery film attachment device 100. Referring to FIG. 10, FIG. 10 is a schematic flowchart of the film attachment method provided by the present application.

The battery film attachment device 100 has a film supply station, a lifting station and a film attachment station provided in a third direction corresponding to the lifting station. The battery film attachment device 100 includes a conveying line, a battery positioning apparatus 1, a film supply apparatus 2 and a film attachment apparatus 3. The battery positioning apparatus includes a positioning base 11 and a positioning lifting structure 14. The film attachment method comprises:
S20: Positioning step: when the conveying line transfers the tray 200 loaded with the battery module 300 to the lifting station, controlling the positioning lifting structure 14 to operate to lift the battery module 300 at the lifting station to the film attachment station;

It can be understood that the tray 200 loaded with the battery module 300 is transported by a conveying apparatus, the conveying apparatus is used to transfer the battery modules 300 on the production line, so as to convey the battery modules 300 that has been processed in the upstream station to the film attachment station, and at the same time convey the battery modules 300 that have completed film attachment at the film attachment station to the downstream station.

S30: Film supply step: controlling the film supply apparatus 2 to operate to supply the formed insulating film to the film supply station;
It can be understood that the film supply apparatus 2 can be a conveying structure only for conveying the formed insulating film, or it can be a combined structure that includes a processing structure for processing the insulating film roll into the formed insulating film and a conveying structure for conveying the formed insulating film, which is not limited in the embodiments of the present application.

S40: Film attachment step: controlling the film attachment apparatus 3 to operate to pick up the formed insulating film at the film supply station and attach the formed insulating film onto the battery module 300 at the film attachment station.

It should be noted that there is no necessary sequence relationship among the positioning step, the film supply step and the film attachment step. It depends on the movements of the battery positioning apparatus 1, the film supply apparatus 2 and the film attachment apparatus 3. What needs to be guaranteed in the end is that before the film attachment apparatus 3 operates, the battery positioning apparatus 1 needs to position the battery module 300 to the film attachment station, and at the same time the film supply apparatus 2 needs to transport the formed insulating film to the film supply station, so that the film supply apparatus 2 can attach the formed insulating film at the film supply station onto the battery module 300 at the film attachment station.

In the embodiment, when the conveying apparatus conveys the tray 200 loaded with the battery module 300 to the film attachment station, the battery positioning apparatus 1 is controlled to operate to position the tray 200 loaded with the battery module 300 to the film attachment station, and the film supply apparatus 2 is controlled to operate to supply the formed insulating film to the film supply station. At the same time, the film attachment apparatus 3 is controlled to operate to adsorb the formed insulating film at the film supply station and attach it onto the battery module 300 at the film attachment station. In this way, by providing the control apparatus, the battery positioning apparatus 1 is controlled to position the battery module 300 to the film attachment station, and the film supply apparatus 2 is controlled to provide the formed insulating film to the film supply station, and then the film attachment apparatus 3 is controlled to attach the formed insulating film at the film supply station onto the battery module 300, thereby improving the degree of automation of the film attachment device, overcoming the shortcomings of manual operation, and greatly improving work efficiency and product quality.

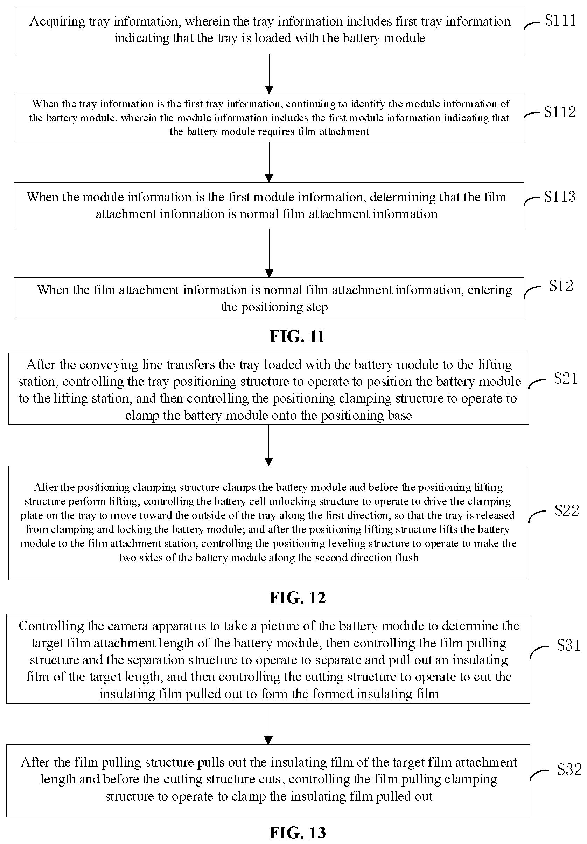

Referring to FIG. 11, FIG. 11 is a schematic flowchart of a film attachment identification step of a film attachment method provided in the present application.

Before step S20, the film attachment method further comprises a film attachment identification step, and the film attachment identification step comprises:
S11: Acquiring film attachment information, wherein the film attachment information includes normal film attachment information indicating that the tray 200 is loaded with the battery module 300 requiring film attachment;

It should be noted that the normal film attachment information means that the tray 200 is loaded with the battery module 300 and the battery module 300 requires film attachment. Since there are various situations for the materials transported to the battery positioning apparatus 1, it may be a tray 200 without any battery module 300, or the loaded battery module 300 does not require film attachment, or it may be an NG product from the previous station, etc., the film information requiring entering the battery positioning apparatus 1 needs to be identified so that the battery module 300 that requires film attachment will enter the positioning step.

S12: When the film attachment information is normal film attachment information, entering the positioning step.

In the embodiment, when the tray 200 arrives at the battery positioning apparatus 1, the film information of the battery module 300 on the tray 200 is determined. When the film information of the battery module 300 loaded on the tray 200 is determined to be normal film information, it means that the battery module 300 requires film attachment. At this time, the control apparatus controls the tray 200 loaded with the battery module 300 to enter the positioning step so as to attach the film onto the battery module 300 that requires film attachment. In this way, before the battery positioning apparatus 1 operates, the battery module 300 entering the battery positioning apparatus 1 is identified so that the battery module 300 that requires film attachment enters the positioning step, thereby effectively improving the film attachment efficiency of the film attachment device.

Furthermore, step S11 comprises:
S111: Acquiring tray 200 information, wherein the tray 200 information includes first tray 200 information indicating that the tray 200 is loaded with the battery module 300;

It should be noted that there are many ways to obtain the tray 200 information. It can be identified by the camera apparatus 35 or identified by reading an electronic tag, etc., which is not limited in the embodiments of the present application.

S112: When the tray 200 information is the first tray 200 information, continuing to identify the module information of the battery module 300, wherein the module information includes the first module information indicating that the battery module 300 requires film attachment;
It should be noted that the first module information means that the battery module 300 requires film attachment. After the tray 200 arrives at the battery positioning apparatus 1, the module information in the electronic tag is read by a reader/writer to obtain the first module information indicating that the battery module 300 in the tray 200 requires film attachment. Here, the electronic tag may be a Radio Frequency Identification (RFID) chip, which is specifically placed on the lower surface of the tray 200. In this way, after the tray 200 arrives at the battery positioning apparatus 1, the control apparatus can identify the electronic tag to read the film information of the battery module 300 in the tray 200.

It should also be noted that the film attachment information of the battery module 300 in the tray 200 can be sent to the control apparatus by the Manufacturing Execution System (MES). The MES system is deployed in the upper computer or server. Here, the MES system is used for acquiring output information of a plurality of production devices. The output information includes output time of a plurality of products produced by the production device and identifications used for indicating whether the plurality of products are qualified. The MES system includes monitoring of the production process. The monitoring of the production process of the MES system focuses on monitoring of material transportation and quality indicators between a production process and a technological process. It is based on real-time data of the production process and uses the configuration technology of the MES system to realize real-time monitoring of the production progress, process quality, and material consumption in production areas such as a production workshop, a power and energy workshop, an auxiliary material warehouse, and a finished product warehouse. When the production process monitoring system detects an abnormality, it may issue an alarm according to preset settings, thereby helping a production command and dispatch department of an enterprise perform production coordination and rational dispatch, and improving the rapid response ability of production. In addition, on the basis of production process monitoring, the MES system organizes and coordinates production according to the production process characteristics of various industries, tracks production process data, and assesses various production indicators; and through data analysis, optimizes the production process, realizes plan preparation and tracking, production data analysis, assessment management, and the like. Managers are capable of grasping the input and output of the entire factory in real time and optimizing production decisions, thereby minimizing production time, reducing errors, and reducing costs related to manual and repeated data entry as much as possible. The main functions include production plan management, production organization, workshop assessment and personnel management, production data analysis, and other subsystems.

S113: When the module information is the first module information, determining that the film attachment information is normal film attachment information.

In the embodiment, after the tray 200 enters the battery positioning apparatus 1, the tray 200 information is acquired to judge whether the tray 200 is loaded with the battery module 300. When the tray 200 information is determined to be the first tray 200 information, it means that the tray 200 is loaded with the battery module 300. Then, the module information of the battery module 300 is acquired to judge whether the battery module 300 requires film attachment. When the module information is determined to be the first module information, it means that the battery module 300 loaded in the tray 200 is a battery module 300 that requires film attachment. In this way, the normal film attachment information of the battery module 300 is determined through the tray 200 information and the module information, so as to identify entering the battery positioning apparatus 1, so that the film attachment device only attaches films onto battery modules 300 that require film attachment, thereby helping to improve the film attachment efficiency of the film attachment device.

Referring to FIG. 12, FIG. 12 is a schematic flowchart of a positioning step of a film attachment method provided in the present application.

The battery positioning apparatus 1 includes a positioning clamping structure 12 and a tray positioning structure 15, and step S20 comprises:
S21: After the conveying line transfers the tray 200 loaded with the battery module 300 to the lifting station, the tray positioning structure 15 is controlled to operate to position the battery module 300 to the lifting station, and then the positioning clamping structure 12 is controlled to operate to clamp the battery module 300 onto the positioning base 11.

In the embodiment, after the tray 200 enters the battery positioning apparatus 1, the tray positioning structure 15 is first controlled to act so as to position the tray 200 loaded with the battery module 300 to a preset positioning position, and then the positioning clamping structure 12 is controlled to operate to clamp the battery module 300 onto the positioning base 11 after the battery module 300 is positioned to the preset positioning position, which reduces the risk of movement of the battery module 300 during subsequent film attachment, thereby facilitating subsequent film attachment of the battery module 300.

Furthermore, the battery positioning apparatus 1 includes a battery cell unlocking structure 16, a positioning lifting structure and a positioning leveling structure 13, and the step S20 further comprises:
S22: After the positioning clamping structure 12 clamps the battery module 300 and before the positioning lifting structure 14 perform lifting, the battery cell unlocking structure 16 is controlled to operate to drive the clamping plate 210 on the tray 200 to move toward the outside of the tray 200 along the first direction, so that the tray 200 is released from clamping and locking the battery module 300; and after the positioning lifting structure 14 lifts the battery module 300 to the film attachment station, the positioning leveling structure 13 is controlled to operate to make the two sides of the battery module 300 along the second direction flush.

It should be noted that since the battery module 300 is loaded in the tray 200 and translated to the battery positioning apparatus 1 by the conveying apparatus, if the battery module 300 is directly subjected to film attachment after the battery module 300 is clamped and positioned by the positioning clamping structure 12, the film attachment apparatus 3 is also likely to interfere with other structures on the positioning base 11. Therefore, the battery module 300 needs to be lifted up in order to attach a film onto the battery module 300. However, a large clamping force is required to move the battery module 300 upward to the film attachment station through the positioning clamping structure 12, which may easily damage the battery module 300. At the same time, since the position of the single battery cells in the battery module 300 may move during the transfer of the battery module 300, the two sides of the battery module 300 along the width direction cannot be flush, which will affect the film attachment effect of the film attachment device 3.

In the present application, after the positioning clamping structure 12 clamps the battery module 300, the battery cell unlocking structure 16 is first controlled to operate to enable the battery unlocking member to compress the locking spring 220 on the tray 200 so that the clamping plate 210 can move along the first direction toward the outside of the tray 200 to release the tray 200 from clamping and fixing the battery module 300. Then, the positioning lifting structure 14 is controlled to operate to carry the battery module 300, which helps to reduce the clamping force on the battery module 300 applied by the positioning clamping structure 12, thereby facilitating separation of the battery module 300 from the tray 200. Then, the positioning leveling structure 13 is controlled to operate to level the two sides of the battery module 300 along the width direction, thereby facilitating subsequent film attachment by the film attachment apparatus 3.

Referring to FIG. 13, FIG. 13 is a schematic flowchart of a film supply step of a film attachment method provided in the present application.

The film attachment apparatus 3 includes a camera apparatus 35, and the film supply apparatus 2 includes a separation structure 23, a film pulling structure 24 and a cutting structure. Step S30 comprises:
S31: Controlling the camera apparatus 35 to take a picture of the battery module 300 to determine the target film attachment length of the battery module 300, and then controlling the film pulling structure 24 and the separation structure 23 to operate to separate and pull out an insulating film of the target film attachment length, and then controlling the cutting structure to operate to cut the insulating film pulled out to form the formed insulating film.

In the embodiment, after the battery module 300 enters the battery positioning apparatus 1, the camera apparatus 35 is controlled to take a picture of the battery module 300 at the film attachment station to obtain the target film attachment length of the battery module 300, then the film pulling structure 24 and the separation structure 23 are controlled to operate to separate the insulating film roll into an insulating film and a release paper, and pull out an insulating film of the target length, and then the cutting structure is controlled to operate to cut the insulating film pulled out to form the formed insulating film of the target length.

Furthermore, the film supply apparatus 2 further includes a film pulling clamping structure 25. Film supply S30 comprises:
S32: After the film pulling structure 24 pulls out the insulating film of the target film attachment length and before the cutting structure cuts, controlling the film pulling clamping structure 25 to operate to clamp the insulating film pulled out.

It should be noted that after the film pulling structure 24 pulls out the insulating film, a pulling force is formed between the film pulling structure 24 and the separation structure 23. If the insulating film pulled out is directly cut, the cut insulating film is easy to shrink into a clump toward the separation structure 23, which is not conducive to the subsequent film pulling by the film pulling structure 24.

In the present embodiment, after the film pulling structure 24 pulls out the insulating film of the target film attachment length and before the cutting structure cuts, the film pulling structure 24 is controlled to operate to clamp the insulating film between the separation structure 23 and the film pulling structure 24. This not only helps the cutting structure to cut the insulating film pulled out, but also reduces the probability of the insulating film shrinking into a clump, thereby helping the film pulling structure 24 to continue pulling films subsequently.

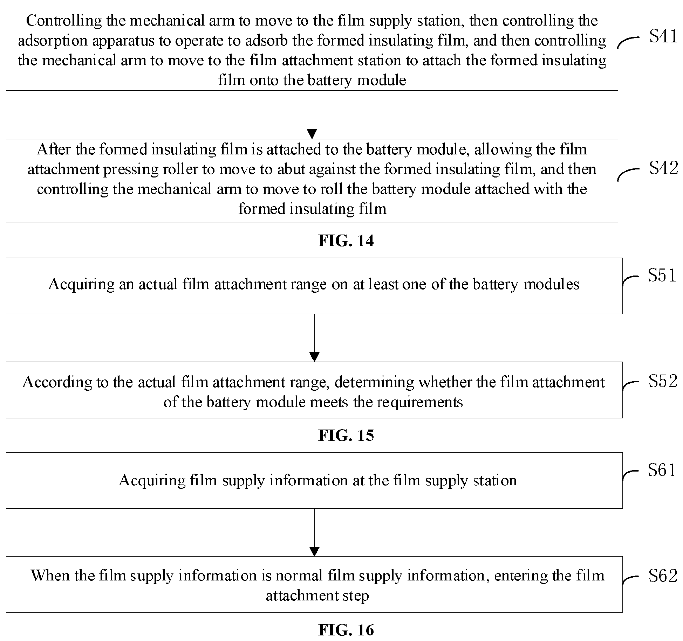

Referring to FIG. 14, FIG. 14 is a schematic flowchart of a film attachment step of a film attachment method provided in the present application.

The film attachment apparatus 3 includes a mechanical arm 31, a film attachment mounting seat 32 mounted on the mechanical arm 31, and an adsorption apparatus 33 mounted on the film attachment mounting seat 32. Step S40 comprises:
S41: Controlling the mechanical arm 31 to move to the film supply station, then controlling the adsorption apparatus 33 to operate to adsorb the formed insulating film, and then controlling the mechanical arm 31 to move to the film attachment station to attach the formed insulating film onto the battery module 300.

In the embodiment, the mechanical arm 31 is first controlled to move to the film supply station to adsorb the formed insulating film at the film supply station, and then the mechanical arm 31 is controlled to move to the film attachment station to attach the formed insulating film onto the battery module 300 at the film attachment station.

Furthermore, the film attachment apparatus 3 further includes a film attachment pressing roller 34. Step S40 further comprises:
S42: After the formed insulating film is attached to the battery module 300, allowing the film attachment pressing roller 34 to move to abut against the formed insulating film, and then controlling the mechanical arm 31 to move to roll the battery module 300 attached with the formed insulating film.

In the embodiment, after the formed insulating film is attached to the battery module 300, the film attachment pressing roller 34 is first controlled to move so that the film attachment pressing roller 34 protrudes from the adsorption apparatus 33, and then the mechanical arm 31 is controlled to move to roll the battery module 300 attached with the formed insulating film, which helps to improve the film attachment effect of the film attachment apparatus 3.

Referring to FIG. 15, FIG. 15 is a schematic flowchart of a detection step of a film attachment method provided in the present application.

After step S40, the film attachment method further comprises a detection step, which comprises:
S51: Acquiring an actual film attachment range on at least one of the battery modules 300;

It should be noted that there are many ways to obtain the actual film attachment range of the battery module 300. It can be obtained by the camera apparatus 35 or by laser scanning, etc., which is not limited in the embodiments of the present application. Furthermore, the data of the actual film attachment range obtained can be one or more, and the specific number can be adjusted as needed, which is not limited in the embodiments of the present application. In the present application, since the camera apparatus 35 is provided on the mechanical arm 31, the actual film attachment range obtained by taking pictures is greatly affected by the mechanical arm 31. In order to avoid data deviation due to external parameters, multiple actual film attachment ranges are generally obtained to reduce interference from external factors.

S52: According to the actual film attachment range, determining whether the film attachment of the battery module 300 meets the requirements.

In the embodiment, after the film attachment of the battery module 300 is completed, it is necessary to determine whether the film attachment of the battery module 300 meets the requirements. Therefore, the actual film attachment range is acquired to judge the film attachment state of the battery module 300. In this way, by acquiring at least one actual film attachment range, the interference of external factors can be reduced, which is conducive to accurately determining whether the film attachment of the battery module 300 meets the requirements, so as to classify the battery modules 300 to prevent the battery modules 300 with unqualified film attachment from being transferred to subsequent processing stations.

Furthermore, step S52 comprises:
S521: When at least one of the actual film attachment ranges meets the preset film attachment range, determining that the film attachment of the battery module 300 meets the requirements;
S522: When the actual film attachment range does not meet the preset film attachment range, manually determining whether the film attachment of the battery module 300 meets the requirements.

In the embodiment, since the control apparatus is greatly affected by the movement of the mechanical arm 31 or the camera apparatus 35 itself when judging the film attachment state of the battery module 300, there may be certain misjudgments. Therefore, if any one of the multiple actual film attachment ranges meets the preset film attachment range, it means that the film attachment of the battery module 300 meets the requirements. If all the actual film attachment ranges do not meet the preset film attachment range, at this time, the film attachment state of the battery module 300 is manually judged to reduce the probability of mechanical misjudgment.

Furthermore, step S522 comprises:
S5221: When it is manually determined that the film attachment of the battery module 300 meets the requirements, determining that the film attachment state of the battery module 300 meets the requirements;
S5222: When it is manually determined that the film attachment of the battery module 300 does not meet the requirements, determining that the film attachment of the battery module 300 does not meet the requirements.

In the embodiment, when it is manually determined that the film attachment of the battery module 300 meets the requirements, it means that the film attachment of the battery module 300 meets the requirements. At this time, it is determined that the film attachment state of the battery module 300 meets the requirements. When it is manually determined that the film attachment of the battery module 300 does not meet the requirements, it means that the film attachment of the battery module 300 does not meet the requirements. At this time, it is determined that the film attachment state of the battery module 300 does not meet the requirements. In this way, the film attachment state of the battery module 300 is first judged mechanically, and then the film attachment state of the battery module 300 is manually judged. This can not only greatly reduce the workload of manual judgment and reduce work intensity, but also effectively reduce the probability of mechanical or manual misjudgment, which is conducive to accurate judgment of the film attachment state of the battery module 300.

Referring to FIG. 16, FIG. 16 is a schematic flowchart of a film supply identification step of a film attachment method provided in the present application.

Before step S40, the film attachment method further comprises a film supply identification step, and the film supply identification step comprises:
S61: acquiring film supply information at the film supply station, wherein the film supply information includes normal film supply information that the formed insulating film meets the film attachment length of the battery module;
S62: when the film supply information is normal film supply information, entering the film attachment step.

In the present embodiment, when a formed insulating film is formed at the film supply station, the film supply information at the film supply station is acquired to judge whether the length of the formed insulating film at the film supply station meets the film attachment length required by the battery module. When the film supply information is determined to be normal film supply information, it indicates that the length of the formed insulating film at the film supply station meets the film attachment length required by the battery module. In this way, the film supply information is used to identify the length of the formed insulating film at the film supply station to ensure that the length of the formed insulating film at the film supply station meets the film attachment length required by the battery module, thereby helping to improve the film attachment qualification rate of the battery film attachment device.

Finally, it should be noted that the aforementioned embodiments are only used for explaining the technical solution of the present application, and not for limiting the present application. Although the present application has been described in detail with reference to the aforementioned embodiments, it should understand by those of ordinary skills in the art that the technical solutions described in the aforementioned embodiments can still be modified, or some or all of the technical features can be equivalently replaced. The modifications or replacements do not deviate the nature of the corresponding technical solutions from the scope of the embodiments of the present application, and should all be included in the scope of the claims and specification of the present application. In particular, the technical features mentioned in the various embodiments can be combined in any manner as long as there is no structural conflict. The present application is not limited to the particular embodiments disclosed herein, but rather includes all technical solutions falling within the scope of the claims.

The foregoing descriptions are merely some preferred embodiments of the present application, but are not intended to limit the scope of the present application. Any equivalent structural transformations or equivalent process transformations made under the concept of the present application by using the content of the specification and accompanying drawings, or direct/indirect application of the content of the specification and accompanying drawings to other related technical fields should fall within the scope of the present application.

## Claims

1. A battery film attachment device, wherein the battery film attachment device has a film supply station, a lifting station, and a film attachment station provided corresponding to the lifting station in a third direction, and the battery film attachment device includes:
a conveying line, passing through the lifting station and used for conveying a battery module to the lifting station;
a battery positioning apparatus, including a positioning base and a positioning lifting structure provided on the positioning base, wherein the positioning lifting structure moves between the lifting station and the film attachment station and used for lifting the battery module at the lifting station to the film attachment station;
a film supply apparatus, provided corresponding to the film supply station and used for providing a formed insulating film to the film supply station; and
a film attachment apparatus, having a movement travel between the film supply station and the film attachment station, used for picking up the formed insulating film at the film supply station and attaching the formed insulating film onto the battery module at the film attachment station; and
a control apparatus, electrically connected to the battery positioning apparatus, the film supply apparatus and the film attachment apparatus, and used for controlling the battery positioning apparatus, the film supply apparatus and the film attachment apparatus to act;
the positioning lifting structure includes:
a positioning lifting seat, movably mounted on the positioning base along the third direction, and used to movably pass through a pocket hole in the middle of a tray; and
a positioning lifting driving structure, provided on the positioning base and drivably connected to the positioning lifting seat, used for driving the positioning lifting seat to move along the third direction;
the battery positioning apparatus includes a positioning clamping structure, the positioning clamping structure includes two positioning clamping portions mounted on the positioning base at intervals along a first direction, and at least one of the positioning clamping portions can move along the first direction so that the two positioning clamping portions can clamp and position the battery module to the film attachment station;
the battery positioning apparatus includes a positioning lifting structure used for driving the battery module to move to the film attachment station along the third direction;
the positioning base includes a positioning seat body and two positioning mounting seats movably mounted on the positioning seat body along the third direction, and the two positioning clamping portions are respectively mounted on the two positioning mounting seats.

2. The battery film attachment device according to claim 1, wherein the positioning clamping structure further includes a first positioning clamping driving apparatus provided on the positioning base, and the first positioning clamping driving apparatus is drivably connected to the positioning clamping portion to drive the positioning clamping portion to move along the first direction.

3. The battery film attachment device according to claim 2, wherein the positioning clamping structure further includes a second positioning clamping driving apparatus provided on the positioning seat body, and the second positioning clamping driving apparatus is drivably connected to the positioning mounting seat to drive the positioning mounting seat to move along the third direction;
wherein the first positioning clamping driving apparatus is provided on the positioning mounting seat.

4. The battery film attachment device according to claim 1, wherein the battery positioning apparatus further includes a positioning leveling structure, the positioning leveling structure includes two positioning leveling portions provided at intervals along a second direction, each of the positioning leveling portions can move along the second direction to enable the two positioning leveling portions to clamp and level the battery module;
wherein the first direction intersects with the second direction.

5. The battery film attachment device according to claim 4, wherein the battery positioning apparatus includes a positioning lifting structure used for driving the battery module to move to the film attachment station along the third direction;
the positioning base includes a positioning seat body and two positioning leveling seats movably mounted on the positioning seat body along the third direction, and the two positioning leveling portions are respectively mounted on the two positioning leveling seats.

6. The battery film attachment device according to claim 4, wherein the positioning leveling structure further includes two first positioning leveling driving apparatuses provided on the positioning base, and the two first positioning clamping driving apparatuses are drivably connected to the two positioning leveling portions to drive the positioning leveling portions to move along the second direction.

7. The battery film attachment device according to claim 6, wherein the battery positioning apparatus includes a positioning lifting structure used for driving the battery module to move to the film attachment station along the third direction;
the positioning base includes a positioning seat body and two positioning leveling seats movably mounted on the positioning seat body along the third direction, and the two positioning leveling portions are respectively mounted on the two positioning leveling seats;
the positioning leveling structure further includes a second positioning leveling driving apparatus provided on the positioning seat body, the second positioning leveling driving apparatus is drivably connected to the positioning leveling seat to drive the positioning leveling seat to move along the third direction, wherein the first positioning leveling driving apparatus is provided on the positioning mounting seat.

8. The battery film attachment device according to claim 1, wherein the battery positioning apparatus further includes a tray positioning structure provided on the positioning base and used for positioning the tray onto the positioning base.

9. The battery film attachment device according to claim 8, wherein the tray positioning structure includes:
a tray positioning seat, movably mounted on the positioning base along the third direction;
a tray positioning pin, provided on the tray positioning seat and used for passing through a corresponding positioning hole on the tray; and
a tray positioning driving structure, provided on the positioning base and drivably connected to the tray positioning seat to drive the tray positioning seat to move along the third direction.

10. The battery film attachment device according to claim 8, wherein a plurality of tray positioning pins are provided, and the plurality of tray positioning pins are provided at intervals on the tray positioning seat.

11. The battery film attachment device according to claim 1, wherein the battery positioning apparatus further includes a battery cell unlocking structure provided on the positioning base, and the battery cell unlocking structure includes a battery cell unlocking member capable of moving along the first direction to drive a clamping plate on the tray to move toward the outside of the tray along the first direction.

12. The battery film attachment device according to claim 11, wherein the battery cell unlocking structure further includes:
an unlocking mounting seat, slidably mounted on the positioning base along the first direction;
an unlocking sliding seat, slidably mounted on the unlocking mounting seat along the second direction, the battery cell unlocking member being provided on the unlocking sliding seat; and
an unlocking driving structure, including a first unlocking driving apparatus provided between the positioning base and the unlocking mounting seat, and a second unlocking driving apparatus provided between the unlocking mounting seat and the unlocking sliding seat, wherein the first unlocking driving apparatus is drivably connected to the unlocking mounting seat to drive the unlocking mounting seat to move along the first direction, and the second unlocking driving apparatus is drivably connected to the unlocking sliding seat to drive the unlocking sliding seat to move along the second direction;
wherein the first direction intersects with the second direction.

13. The battery film attachment device according to claim 12, wherein a plurality of battery cell unlocking structures are provided, and the plurality of battery cell unlocking structures are provided at intervals along the first direction and/or the second direction to respectively correspond to a plurality of locking springs of the tray.

14. The battery film attachment device according to claim 1, wherein the film supply apparatus includes:
a feed base;
a feed structure, including a film supply tray provided on the feed base, wherein the film supply tray is used to mount an insulating film roll;
a separation structure, provided on the feed base and used for separating the insulating film roll into an insulating film and a release paper;
a film pulling structure, including a film pulling seat mounted on the feed base, and two film pulling clamping portions mounted on the film pulling seat, wherein the distance between the two film pulling clamping portions is adjustable to clamp or release the insulating film, and the film pulling seat is movably provided along the first direction to pull the insulating film to the film supply station; and
a cutting structure, including a cutting knife provided on the feed base, and used for cutting the insulating film so as to form the formed insulating film at the film supply station.

15. The battery film attachment device according to claim 14, wherein the film supply apparatus further includes a film pulling clamping structure provided on the feed base, and the film pulling clamping structure is provided between the film supply tray and the film pulling structure to fix the insulating film onto the feed base.

16. The battery film attachment device according to claim 15, wherein the film pulling clamping structure includes:
two film pulling clamping portions, provided on the feed base, wherein at least one of the film pulling clamping portions is a movable film pulling clamping portion, and the movable film pulling clamping portion is movably provided along the third direction and used for clamping the insulating film onto the feed base; and
a film pulling clamping driving structure, provided on the feed base and drivably connected to the movable film pulling clamping portion to drive the movable film pulling clamping portion to move along the third direction.

17. The battery film attachment device according to claim 16, wherein the separation structure includes:
a positioning roller, provided on the feed base and provided corresponding to the film pulling structure; and
a winding roller, rotatably mounted on the feed base and used for separating and winding the release paper.

18. The battery film attachment device according to claim 14, wherein the feed structure, the film pulling structure and the cutting structure are correspondingly configured as a film supply assembly, two film supply assemblies are provided, and the two film supply assemblies are mounted at intervals on the feed base.

19. The battery film attachment device according to claim 14, wherein the film supply apparatus further includes a film supply carrying seat movably mounted on the feed base along the third direction for carrying the insulating film pulled out.

20. The battery film attachment device according to claim 1 or 14, wherein the film attachment apparatus includes:
a mechanical arm, having a movement travel between the film supply station and the film attachment station;
a film attachment mounting seat, mounted on the mechanical arm;
an adsorption apparatus, provided on the film attachment mounting seat, and used for adsorbing the formed insulating film on the film supply station when the mechanical arm is at the film supply station, and attaching the formed insulating film onto the battery module at the film attachment station when the mechanical arm is at the film attachment station.

21. The battery film attachment device according to claim 20, wherein the film attachment mounting seat includes:
a film attachment seat body, mounted on the mechanical arm;
a movable film attachment seat, mounted on the film attachment seat body in a direction approaching or moving away from the film attachment seat body; and
a film attachment buffer structure, provided between the film attachment seat body and the movable film attachment seat, and used for elastically supporting the movable film attachment seat.

22. The battery film attachment device according to claim 21, wherein the film attachment seat body is provided with a film attachment mounting hole;
the film attachment buffer structure includes:
a film attachment mounting rod, one end of which is provided on the movable film attachment seat, and the other end of which passes through the film attachment mounting hole along a direction approaching or moving away from the film attachment seat body;
a film attachment elastic member, sleeved on the peripheral side of the film attachment mounting rod and provided between the film attachment seat body and the movable film attachment seat; and
an elastic adjustment sleeve, threadedly sleeved on the other end of the film attachment mounting rod and used for adjusting a distance between the film attachment seat body and the movable film attachment seat.

23. The battery film attachment device according to claim 20, wherein the film attachment apparatus includes a film attachment pressing roller movably mounted on the film attachment mounting seat along the thickness direction of the film attachment mounting seat.

24. The battery film attachment device according to claim 20, wherein the film attachment apparatus includes a camera apparatus mounted on the film attachment mounting seat, and the camera apparatus is electrically connected to the control apparatus.

25. A film attachment method for the battery film attachment device according to any one of claims 1 to 24, wherein the battery film attachment device has a film supply station, a lifting station, and a film attachment station provided corresponding to the lifting station in the third direction, the battery film attachment device includes a conveying line, a battery positioning apparatus, a film supply apparatus, and a film attachment apparatus, the battery positioning apparatus includes a positioning base and a positioning lifting structure, and the film attachment method comprises:
a positioning step: when the conveying line transfers the tray loaded with the battery module to the lifting station, controlling the positioning lifting structure to operate to lift the battery module at the lifting station to the film attachment station;
a film supply step: controlling the film supply apparatus to operate to supply the formed insulating film to the film supply station;
a film attachment step: controlling the film attachment apparatus to operate to pick up the formed insulating film at the film supply station and attach the formed insulating film onto the battery module at the film attachment station.

26. The film attachment method according to claim 25, wherein before the positioning step, the film attachment method further comprises a film attachment identification step, and the film attachment identification step comprises:
acquiring film attachment information, wherein the film attachment information includes normal film attachment information indicating that the tray is loaded with the battery module requiring film attachment;
when the film attachment information is normal film attachment information, entering the positioning step.

27. The film attachment method according to claim 26, wherein the acquiring film attachment information comprises:
acquiring tray information, wherein the tray information includes a first tray information indicating that the tray is loaded with the battery module;
when the tray information is the first tray information, continuing to identify a module information of the battery module, wherein the module information includes a first module information indicating that the battery module requires film attachment;
when the module information is the first module information, determining that the film attachment information is normal film attachment information.

28. The film attachment method according to claim 25, wherein the battery positioning apparatus includes a positioning clamping structure and a tray positioning structure;
the positioning step comprises:
after the conveying line transfers the tray loaded with the battery module to the lifting station, controlling the tray positioning structure to operate to position the battery module to the lifting station, and then controlling the positioning clamping structure to operate to clamp the battery module onto the positioning base.

29. The film attachment method according to claim 28, wherein the battery positioning apparatus includes a battery cell unlocking structure and a positioning leveling structure;
the positioning step further comprises:
after the positioning clamping structure clamps the battery module and before the positioning lifting structure perform lifting, controlling the battery cell unlocking structure to operate to drive a clamping plate on the tray to move toward the outside of the tray along the first direction, so that the tray is released from clamping and locking the battery module; and after the positioning lifting structure lifts the battery module to the film attachment station, controlling the positioning leveling structure to operate to make two sides of the battery module along the second direction flush.

30. The film attachment method according to claim 25, wherein the film attachment device includes a camera apparatus, and the film supply apparatus includes a separation structure, a film pulling structure and a cutting structure;
the film supply step comprises:
controlling the camera apparatus to take a picture of the battery module to determine a target film attachment length of the battery module, then controlling the film pulling structure and the separation structure to operate to separate and pull out an insulating film of the target film attachment length, and then controlling the cutting structure to operate to cut the insulating film pulled out to form the formed insulating film.

31. The film attachment method according to claim 30, wherein the film supply apparatus further includes a film pulling clamping structure;
the film supply step comprises:
after the film pulling structure pulls out the insulating film of the target film attachment length and before the cutting structure cuts, controlling the film pulling clamping structure to operate to clamp the insulating film pulled out.

32. The film attachment method according to claim 25, wherein the film attachment apparatus includes a mechanical arm, a film attachment mounting seat mounted on the mechanical arm, and an adsorption apparatus mounted on the film attachment mounting seat;
the film attachment step comprises:
controlling the mechanical arm to move to the film supply station, then controlling the adsorption apparatus to operate to adsorb the formed insulating film, and then controlling the mechanical arm to move to the film attachment station to attach the formed insulating film onto the battery module.

33. The film attachment method according to claim 32, wherein the film attachment apparatus further includes a film attachment pressing roller;
the film attachment step further comprises:
after the formed insulating film is attached to the battery module, allowing the film attachment pressing roller to move to abut against the formed insulating film, and then controlling the mechanical arm to move to roll the battery module attached with the formed insulating film.

34. The film attachment method according to claim 25, wherein after the film attachment step, the film attachment method further comprises a detection step, and the detection step comprises:
acquiring an actual film attachment range on at least one of the battery modules;
determining whether the film attachment of the battery module meets the requirements according to the actual film attachment range.

35. The film attachment method according to claim 34, wherein the determining whether the film attachment of the battery module meets the requirements according to the actual film attachment range comprises:
when at least one of the actual film attachment ranges meets the preset film attachment range, determining that the film attachment of the battery module meets the requirements;
when the actual film attachment range does not meet the preset film attachment range, continuing to manually determine whether the film attachment of the battery module meets the requirements.

36. The film attachment method according to claim 35, wherein when the actual film attachment range does not meet the preset film attachment range, it is manually determined whether the film attachment of the battery module meets the requirements, comprising:
when it is manually determined that the film attachment of the battery module meets the requirements, determining that the film attachment state of the battery module meets the requirements;
when it is manually determined that the film attachment of the battery module does not meet the requirements, determining that the film attachment of the battery module does not meet the requirements.

37. The film attachment method according to claim 25, wherein before the film attachment step, the film attachment method further comprises a film supply identification step, and the film supply identification step comprises:
acquiring film supply information at the film supply station, wherein the film supply information includes normal film supply information indicating that the formed insulating film meets a film attachment length of the battery module;
when the film supply information is normal film supply information, entering the film attachment step.
